# EUROPEAN PATENT APPLICATION

(11) **EP 1 635 284 A1**
(43) Date of publication of application: **15.03.2006**
(21) Application number: 04746141.3
(22) Date of filing: 18.06.2004
(51) Int. Cl.: G06Q 10/00

(54) **MARKETING SUPPORT DEVICE AND MARKETING SUPPORT METHOD**

(30) Priority: 18.06.2003 JP 2003173803
(71) Applicant: So-Net M3, Inc., Tokyo 140-0001 (JP)
(72) Inventor: TANIMURA, Itaru, 1580097 Tokyo (JP); CALLAGHAN, Thomas MacTavish, 1530061 Tokyo (JP)
(74) Representative: Turner, James Arthur
(86) International application number: PCT/JP2004/008639
(87) International publication number: WO 2004/114183

(57) **Abstract**

An apparatus and a method for assisting the marketing in which a service provider acts as proxy to send messages to healthcare people, as customers, who have met preset conditions, out of the totality of customers, and in which the healthcare people, who have received the messages, approve an MR of a particular pharmaceutical manufacturing company, so that the number of healthcare individuals, as customers, may be increased without the MR of the particular pharmaceutical manufacturing company visiting the premises of the healthcare people, and so that messages may be exchanged between the MR and the healthcare people. An MR of the main office of a pharmaceutical manufacturing company, supervising MRs in charge, is able to send messages to the healthcare individuals, as customers, in the name of the MR of the main office or the MR in charge, depending on the message sorts. Each participating company is able to increase the number of customers efficiently.

## Description

### Technical Field

This invention relates to an apparatus and a method for assisting the marketing in which a customer may select and register a salesperson so that the registered salesperson is able to provide the information to the customer.

This application claims priority based on the JP Patent Application 2003-173803, filed in Japan on June 18, 2003. This JP Patent Application is incorporated in its entirety by reference herein.

### Background Art

In a gazette of the JP Laid-Open Patent Application 2002-007410 (Publication 1), there is described an MR assisting system for assisting the communication between the MR (Medical Representative) belonging to e.g. a pharmaceutical manufacturing company and the healthcare people belonging to a hospital, such as doctors, pharmacists or nurses, in charge of the healthcare information. This MR assisting system includes an assisting server device for assisting the one-to-one communication between the healthcare people and the MRs approved by the healthcare people. If, with this assisting server device, the healthcare people register a predetermined MR, the MR so registered may formulate a message to the healthcare people who have registered the MR, such as to provide the healthcare people with the healthcare information through such message.

Meanwhile, the MR belongs to a company organization of e.g. a pharmaceutical manufacturing company, and a company, such as a pharmaceutical manufacturing company, takes part in the MR assisting system, on the company level, partly from the perspective of managing the behavior or records of the individual MRs. However, this MR assisting system assists the one-to-one correspondence between the MR and the healthcare people. Hence, the number of the healthcare people, as customers of the pharmaceutical manufacturing companies, will increase mainly by the MR actually meeting the healthcare people and prompting them to take part in the system. Thus, with the MR assisting system of the aforementioned Publication, it is difficult to increase efficiently the number of the healthcare people who will become customers of the respective companies, using network resources.

Similar techniques are disclosed in International Laid-Open Publication 01/082156 pamphlette (Publication 2), JP Laid-Open Patent Publication 2003-44414 (Publication 3), JP Laid-Open Patent Publication 2002-259285 (Publication 4) and JP Laid-Open Patent Publication 2003-85090 (Publication 5). However, in these Publications, there lacks the technical concept of a service provider acting as a go-between for the pharmaceutical manufacturing companies and the healthcare people to increase the number of the healthcare people who become customers by taking part in the system.

On the other hand, the MRs belonging to the companies differ in their ability, so that, for those MRs low in their records, it is necessary to assist them by providing the healthcare people, taken care of by the MRs, with the healthcare information. In such case, it may be advisable to provide the information to the healthcare people not in the name of the company but in the name of the MR. However, in the above Publications, there lacks the concept of assisting the MR by other persons.

Out of the information provided to the healthcare people, the information on a new pharmaceutical may be transmitted more promptly and accurately when the pharmaceutical manufacturing company employing the MRs distributes it unanimously to the healthcare people taken care of by the MRs than when the MRs supply the information. For unanimously distributing the healthcare information to the healthcare information, distribution in the name of the MR in charge may be more desirable, or that in the name of the company may be more desirable, depending on the sort of the information.

In addition, it may be necessary to select the healthcare people the healthcare information is sent to. For example, in distributing a notification for the meeting of the otological association, it is sufficient to send the notification to the healthcare people specializing in otology, while it is unnecessary to send it to those specializing in other fields. If the unnecessary information is sent to the healthcare people as customers, these will simply feel disagreeable.

Moreover, if, when a person other than the MR taking charge directly of a particular healthcare individual proceeds to proxy distribution, without the MR in charge precisely knowing the contents of the distributed message, the result is obstructed communication of the MR in charge with the healthcare individual who is the customer of the MR in charge.

Furthermore, in the aforementioned Publications 1 to 5, there lacks the technical concept of sending messages by proxy distribution to the customers, extracted under a preset condition by an administrator of e.g. a pharmaceutical manufacturing company, in place of by a direct salesperson.

If, in launching unanimous distribution, transmission errors are produced during such transmission, it is difficult to grasp to which healthcare people the information is transmitted and to which healthcare people the information is not transmitted. If unanimous distribution is made a second time to the same healthcare people, the result is that the same message is sent twice to the same healthcare individual.

### Disclosure of the Invention

### Problems to be solved by the Invention

It is an object of the present invention to provide an apparatus and a method for assisting the marketing whereby it is possible to overcome the aforementioned problems of the prior art system.

It is another object of the present invention to provide an apparatus and a method for assisting the marketing in which the customer does not feel onerous and in which the companies taking part in the system will be able to increase the number of their customers efficiently.

It is a further object of the present invention to provide an apparatus and a method for assisting the marketing in which the organization the salespeople belong to may transmit messages to the customers by proxy distribution, in place of the salespeople, and in which the message may be selectively sent for proxy distribution in the name of the salespeople or in the name of the company for efficiently assisting the salespeople.

It is a further object of the present invention to provide an apparatus and a method for assisting the marketing in which, when messages are transmitted unanimously to plural customers, those customers the messages are to be sent to may be efficiently extracted depending on, for example, the sorts of the messages being transmitted.

It is a further object of the present invention to provide an apparatus and a method for assisting the marketing in which, even if a transmission error occurs during unanimous message distribution to the customers, it may be correctly grasped to whom the messages are transmitted and to whom the messages are not transmitted, such as to prevent messages from being sent a plural number of times to a customer.

It is yet another object of the present invention to provide a computer program for accomplishing the above objects and a recording medium having recorded this computer program.

### Means to solve the Problem

According to the present invention, customers' private data are accepted and registered in customer tables which are stored in one of plural customer database. Data for managing plural salespersons are accepted and registered in a company table. Private data of the salespeople belonging to one of plural companies are accepted and registered in salesperson tables for storage in the company database. From the customers, identification data of the salespersons approved by them are accepted and selection registration tables for correlating the customer tables with the salesperson tables of the salespersons identified by the identification data are generated and stored in the company database. The messages addressed to the customers are read out from the message database and provided over a network to the customers. Message preparation by the salespeople is assisted with the generation of the selection registration tables as incentive.

At least one of the plural company databases is owned by a service provider and at least one of the salesperson tables of the company database of the service provider is associated with the totality of customer tables associated in turn with the salesperson tables of the company databases by the selection registration tables. At least one of the remaining salesperson tables of the company database is associated with the totality of customer tables associated in turn with the salesperson tables of the salespersons belonging to the company by the selection registration tables.

A message for a particular one of the companies is read out from the message database and sent over a network to customers of the totality of the customer tables associated with the one salesperson table of the service provider. On receipt of a consenting signal from the customer, a selection registration table associating one salesperson table of the particular company with the customer as the source of transmission of the consenting signal is generated. Thus, by the customers responding to messages sent by the service provider, the particular company may increase the number of customers without actually sending the salesperson to the premises of the customers.

According to the present invention, at least one of salesperson tables of the company databases is a salesperson table belonging to an administrator of each company. A message is read out by proxy, in the name of the administrator or of the salespersons of the other salesperson tables associated with each customer table, from the message database, and supplied over the network to a customer extracted in accordance with a preset retrieving condition by the retrieval means from the totality of the customer tables associated with the at least one salesperson table. The message transmitted to the customer in the name of the administrator or of the salespersons of the other salesperson tables may contain a return message to the message from the customer.

When proxy distribution has been used, a message transmitted or received by the salespersons of the other databases directly in charge of a customer and a message sent by the administrator may be displayed in the terminal of the salesperson so that these two messages may be distinguished from each other in the terminal of the salesperson. The contents of the message may also be made browsable. Also, for management purposes, the transmission/ receipt hysteresis of messages between the totality of salespersons of the company database and the customers may be made browsable in the salesperson terminal belonging to the administrator of each company. When messages have been sent in the name of the administrator, acting as proxy, or of the salesperson of the other salesperson table associated with each customer table, customer use data may be transmitted over a network to the salesperson terminal for confirming the effect of the proxy distribution. Also, according to the present invention, a plurality of customer tables, out of the totality of customer tables, associated with at least one salesperson table, may be grouped together, with each group being then associated, as a customer, with salesperson tables of a particular company via selection registration tables.

According to the present invention, when a message has been sent to a customer extracted in accordance with a preset retrieval condition from the totality of customer tables, associated with at least one salesperson table, in the name of the administrator or of the salespersons of the other salesperson tables, associated with the totality of customer tables, the fact that a message has been sent may be announced to the salesperson of the salesperson table associated with each customer table to apprise the fact of proxy distribution. In addition, according to the present invention, the retrieval comprises a wine-pressing step including an unread message extracting sub-step of extracting messages in the name of the administrator of each company or messages in the name of the salespersons of the other databases, and a responding customer extracting sub-step of extracting customers who received messages addressed to the administrator of each company or messages addressed to the salespersons of the other databases, and a customer name extracting step of extracting all or part of the customers' names entered as retrieving conditions. The wine-pressing step and/or the customer name extracting step extracts preset customers.

If, in the present invention, the totality of the messages, addressed to customers, cannot be transmitted, the messages in their entirety are processed for not being transmitted.

According to the present invention, preparation of messages for customers of the customers' tables associated with the salesperson tables of the salespersons by the selection registration tables and the preparation of return messages to messages transmitted from the customers are assisted.

According to the present invention, the salespeople of salesperson tables associated with the totality of customer tables of the company databases other than the database of the service provider and not approved by the customers are displayed in customer terminals, so that a salesperson not approved by the customer but intimately related to the business of the customer will be introduced to the customer by demonstrating the salesperson not approved by the customer in the customer terminal.

Furthermore, according to the present invention, the customer tables associated with at least one salesperson table is added to by a new customer table each time such new customer table is associated with the other salesperson table.

Although the present invention may be implemented by hardware, it may also be implemented by installing a corresponding computer program in a computer. This computer program may be distributed over a network or as it is stored in a recording medium, such as optical disc.

Other objects and advantages of the present invention will become more apparent from reading the following explanation of preferred embodiments thereof especially when read in conjunction with the drawings.

### Brief Description of the Drawings

Fig.1 is a block diagram showing an assisting system embodying the present invention.
Fig.2 illustrates the relationship among the customers of pharmaceutical manufacturing companies participating in the present system and the customers of an administrator managing the present system.
Fig.3 is a schematic view of an MR assisting server device forming the assisting system of Fig.1.
Fig.4 is a diagrammatic view showing data structures of and the co-relation among an MR table, a selection registration table, a user table and a master table, included in a database of the MR assisting server device shown in Fig.3.
Fig.5 is a diagrammatic view showing data structures of and the co-relation among a message header record, a message body record, a catch picture record and an incoming call log record, included in a message database of the MR assisting server device shown in Fig.3.
Fig.6 is a flowchart for illustrating the sequence for healthcare people to make registration in the assisting server device of Fig.3 using a user terminal device.
Fig.7 illustrates a WWW browser window demonstrated on the user terminal device in the MR assisting server device shown in Fig.3.
Fig.8 illustrates a registration MR page demonstrated on a monitor of the user terminal device when clicking a registration MR button of a sponsor frame of the WWW browser window displayed on the user terminal device.
Fig.9 illustrates a contact overview page demonstrating a contact overview with an MR when clicking the name of an MR in an overview display part of the registration MR page.
Fig.10 illustrates a receipt contact content page demonstrated when clicking a title of the registration MR page shown in Fig.9 or the title shown in Fig.9.
Fig.11 illustrates a new contact page to an MR.
Fig.12 illustrates a display picture of the profile of a contact content forming page MR.
Fig.13 illustrates an MR private information page.
Fig.14 illustrates an MR adding page.
Fig.15 illustrates an MR deleting page.

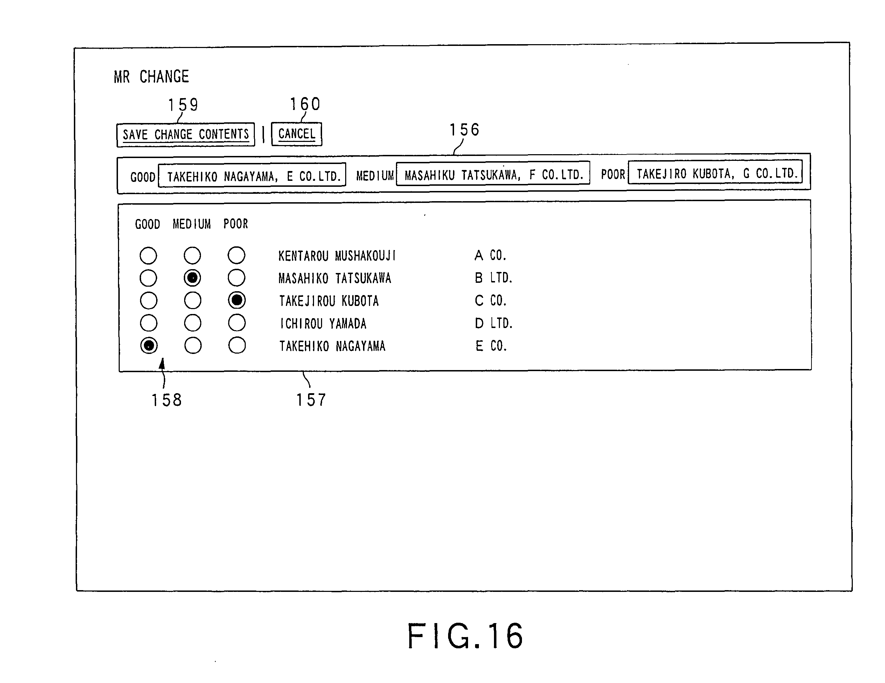

Fig.16 illustrates an MR changing page for changing the display order of plural boxes displayed in the sponsor frame shown in Fig.7.
Fig.17 illustrates an MR managing page displayed on a monitor of a company terminal device.
Fig.18 illustrates an MR adding changing page.
Fig.19 illustrates a top page displayed on a monitor of the MR terminal device.
Fig.20 illustrates a top page displayed on a monitor of the MR terminal device.
Fig.21 illustrates a page demonstrating contact hysteresis of customers.
Fig.22 illustrates a page for confirming details of sent messages.
Fig.23 illustrates a received contact content page.
Fig.24 illustrates a draft message overview page.
Fig.25 illustrates a customer private information page.
Fig.26 illustrates a new message page.
Fig.27 illustrates a customer retrieving page.
Fig.28 illustrates a customer data upload page.
Fig.29 illustrates a transfer destination registration page.
Fig.30 illustrates a message forming page.
Fig.31 illustrates a sent message content confirming page.
Fig.32 illustrates a use data page.
Fig.33 illustrates details of the use data page.
Fig.34 illustrates a registration setting page for registration setting of MRs of the main office.
Fig.35 illustrates a transmitting setting page.
Fig.36 illustrates the processing of an assisting server device when doing proxy distribution.

### Best Mode for Carrying out the Invention

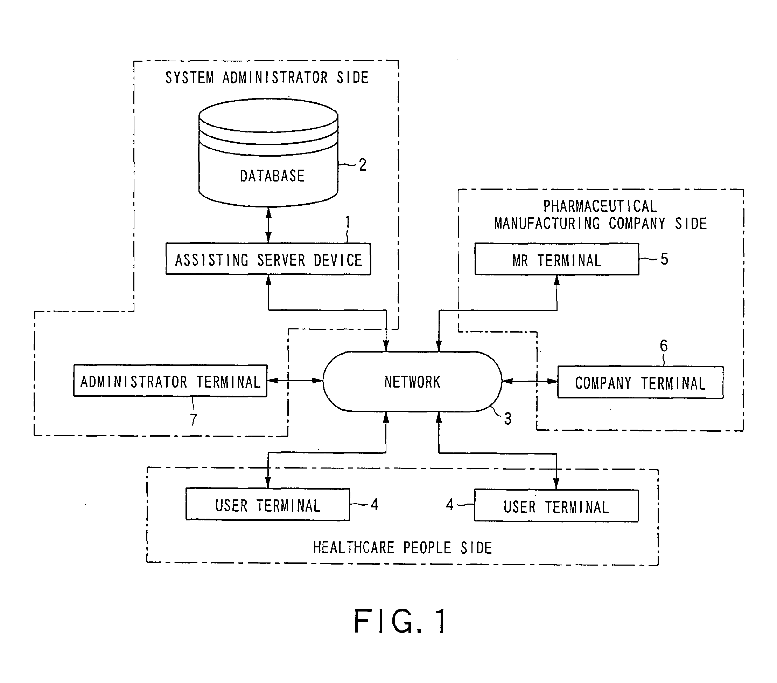

Referring to the drawings, an assisting system, embodying the present invention, will be explained in detail. It is assumed that the assisting system is able to provide a terminal device for healthcare people with contents over a network 3, such as the Internet, as well as to exchange messages in a one-to-one relationship with the healthcare people, the MR is in charge of, as shown in Fig.1.

Specifically, the assisting system, embodying the present invention, includes an assisting server device 1, supervised by an administrator of the present system, and including a database 2, holding the variable information, a user terminal device 4, supervised by doctors, pharmacists, nurses or radiological technicians, sometimes referred to below as users, a plural number of MR terminal devices 5, supervised by MRs in person, belonging to a pharmaceutical manufacturing company, taking part in the present system, a company terminal device 6, supervised by e.g. a pharmaceutical manufacturing company, the MR belongs to, and an administrator terminal device 7 for the administrator of the present system to access the assisting server device 1, as shown in Fig.1. The assisting server device 1, user terminal device 4, MR terminal devices 5, company terminal device 6 and the administrator terminal device 7 are interconnected over a network 3, employing e.g. ISDN (Integrated Services Digital Network), CATV (cable television) network, optical cable network, xDSL (x Digital Subscriber Line) or satellite network for digital satellite broadcast, in such a manner that data may be exchanged in accordance with transmission protocols, such as TCP/IP (Transmission Control Protocol/ Internet Protocol).

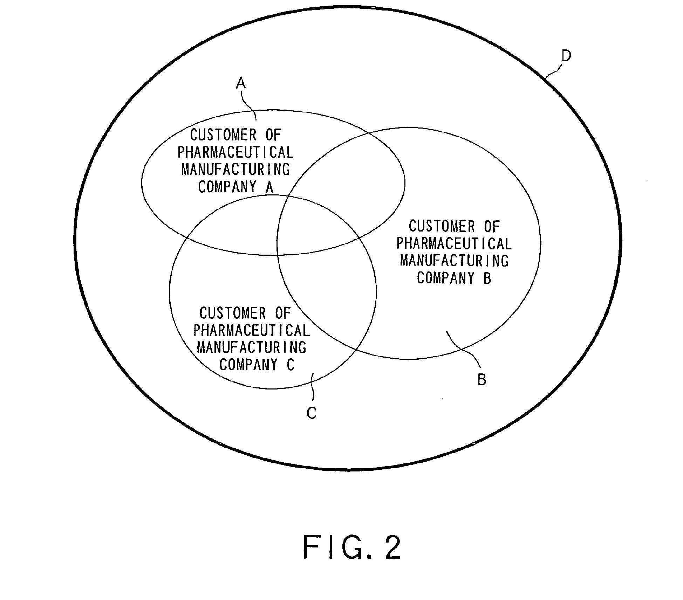

The assisting server device 1 has a configuration equivalent to that of a routine computer, that is, a database 2 is stored in a hard disc, in which there are also installed a variety of programs, such as an operating system or application programs for communication with terminal devices 4 to 7. With the present assisting server device 1, the totality of the healthcare individuals, taking part in the present system, are registered in the database 2 and, when a MR, belonging to a company taking part in the present system, has been approved by the healthcare individuals, registered in the database 2, the MR in charge is correlated with the healthcare individuals, who approved the MR, and the healthcare individuals, who approved the MR, are accepted as being customers of the MR and the company the MR belongs to, as shown in Fig.2.

Fig.2 shows customers, correlated with the pharmaceutical manufacturing company A, in a circle A, while showing customers, correlated with the pharmaceutical manufacturing company B, in a circle B and showing customers, correlated with the pharmaceutical manufacturing company C, in a circle C. The assisting server device 1 permits the company terminal device 6 of each pharmaceutical manufacturing company or the MR terminal devices 5 to exchange messages only with the healthcare individuals by whom the company terminal device 6 of each pharmaceutical manufacturing company or the MR terminal devices 5 was approved. That is, the MR terminal device 5 and the company terminal device 6 of the pharmaceutical manufacturing company may view the healthcare individuals who have become their customers. On the other hand, the assisting server device 1 allows the totality of the healthcare people, who have registered in the present system, that is, a circle D (thick line), inclusive of the circles A to C, in Fig.2, to appear as customers, from the administrator terminal device 7 of the administrator supervising the present system, so that the administrator terminal device will be able to exchange messages with the customers D. Meanwhile, the customers not included in the circles A to C in the circle D stand for healthcare people not correlated with any of the pharmaceutical manufacturing companies. These healthcare people are able to exchange messages with only from the administrator terminal device 7 of the administrator supervising the present system.

It is noted that the assisting server device 1 accords to each pharmaceutical manufacturing company an ID, as data for identifying the pharmaceutical manufacturing company from other pharmaceutical manufacturing companies, while also according to an MR an MRID correlated with the company ID.

The assisting server device 1 is responsive to accessing from the user terminal device 4, exploited by the healthcare people, to offer the information, such as healthcare information or the information of the academic associations, as contents, to the user terminal device 4, while supervising reciprocal message exchanges among the user terminal device 4, MR terminal device 5 and the company terminal device 6. Meanwhile, these message services, offered as services having the functions equivalent to those of the E-mail, routinely used by the healthcare people and the MR, differ in their functions from those of the E-mail scheme, as will be explained subsequently.

Referring to Fig.1, the user terminal device 4, connected to the assisting server device 1 over the network 3, is a terminal device, acted on by the healthcare people, and is formed by e.g. a personal computer, having installed thereon a wide variety of application programs, such as browsers. By executing the WWW (World Wide Web) browser, the user terminal device is able to communicate with the assisting server device 1. Specifically, the user terminal device 4 may browse Web pages relevant to pharmaceuticals, healthcare appliances or researches and developments, set up and maintained by the assisting server device 1 or by a server device of a pharmaceutical manufacturing company. The pharmaceuticals and the healthcare appliances are sometimes referred to below simply as pharmaceuticals. In addition, the user terminal device 4 is able to exchange messages with the MR terminal device 5, company terminal device 6 and with the administrator terminal device 7 on a Web page of the assisting server device 1.

The MR terminal device 5, connected to the assisting server device 1 over the network 3, is formed by information processing devices, such as personal computers, operated by the MR, and has installed thereon a variety of application programs, such as browsers. The MR terminal device 5, approved by the healthcare people, as customers, by executing the WWW browser, may exchange messages with the user terminal device 4, supervised by the healthcare people, with this approval as incentive. Moreover, the MR terminal device 5 may confirm the reaction of the healthcare people to the message sent by the MR.

The company terminal device 6, connected to the assisting server device 1 over the network 3, is an information processing apparatus, such as a personal computer, run by the person belonging to a division comprehensively supervising the business of the pharmaceutical manufacturing company, such as an MR belonging to the main office of the company, the MR belongs to, and has installed thereon a wide variety of application programs, such as browsers. This company terminal device 6 is able to exchange messages with the healthcare people of the customer correlated with the own company, on the Web page of the assisting server device 1, in the name of the MR in charge, the company or an MR of the main office. When transmitting a message to the healthcare people, the company terminal device 6 is able to select the healthcare individual of the destination of message transmission under predetermined conditions.

Meanwhile, the MR terminal device 5 or the company terminal device 6 is unable to exchange messages with the healthcare people, not correlated with the own company, since these healthcare people are not customers in the absence of approval.

The administrator terminal device 7, connected to the assisting server device 1 over the network 3, is an information processing apparatus, such as personal computer, operated by the administrator of the present system. The administrator terminal device 7 is a device having rights over the assisting server device 1 equivalent to those of the company terminal device 6, and is able to communicate with the assisting server device 1 by executing the WWW browser. Specifically, the administrator terminal device 7 is able to distribute messages, as ads for the companies taking part in the present system, to all of the healthcare people taking part in the present system, that is, to the customers D in Fig.2. That is, the administrator of the present system may select addresses of the message from among all healthcare people taking part in the present system. The assisting server device 1 discriminates, based on terminal discrimination data, such as user ID or password, entered from each terminal device, which one of the MR terminal device 5, company terminal device 6 and the administrator terminal device 7 is the terminal device being accessed.

Meanwhile, the healthcare people, MRs and the people in charge of the company terminal device 6 may enjoy the services from the assisting server device 1 by login to the assisting server device 1 by entering the user ID and the password. The assisting server device 1 operates, for the healthcare people, as a portal site for them to provide the functions of message exchange with the MR, for the healthcare people, as well as to provide the function of message exchange with the healthcare people and a user interface for formulating messages for the MR, as will be explained subsequently.

The administrator of the present assisting server system 1 may acquire a profit by collecting the use fees, in fixed amount plan and/or measured amount plan, from the pharmaceutical manufacturing company to which belongs the MR in charge who has concluded a use contract of the assisting system. For example, the administrator tolls the basic fee added by an amount corresponding to the number of messages transmitted by the MR and the number of times the healthcare people unsealed the messages. The assisting server device 1 supervises e.g. the state of contact to the MR and accordingly generates fee data. The assisting server device 1 is connected over a dedicated line to a settlement center and generates fee data every preset period, such every month, and transmits the fee data to the settlement center for settlement processing.

The administrator may also acquire ad revenue from a banner ad provided in a homepage. The assisting system may also toll information providing charges from the healthcare people enjoying its services.

The procedure of the healthcare people utilizing the assisting system will now be explained. The assisting server device 1 has the function of a portal site for providing contents to the healthcare people. When a healthcare individual enters his/her user ID and password for login in the assisting server device 1, there is demonstrated on a browser picture image the healthcare information customized for the healthcare individual. The healthcare people may also acquire an ID of the MR from the MR of the pharmaceutical manufacturing company which has concluded an agreement with the administrator of the present system to register the MR's service code to browse the healthcare information restrictively distributed from the registered pharmaceutical manufacturing company or from the MR belonging to the company. On the browser picture image, there is demonstrated, in addition to the information as the portal site, a sponsor frame 36, to which messages from the MR is guided, as later explained. The one-to-one communication with the MR becomes possible, with this sponsor frame 36 as a starting point.

Meanwhile, the pharmaceutical manufacturing company or the MR, having the intention of exploiting the assisting system for business activities for healthcare people, notifies the healthcare people of the own ID or MRID to prompt the healthcare people to use the assisting system. When a healthcare individual registers the MRID in the assisting server device 1 to approve the MR, it becomes possible for the healthcare people to receive the messages from the MR and to transmit the messages to the MR.

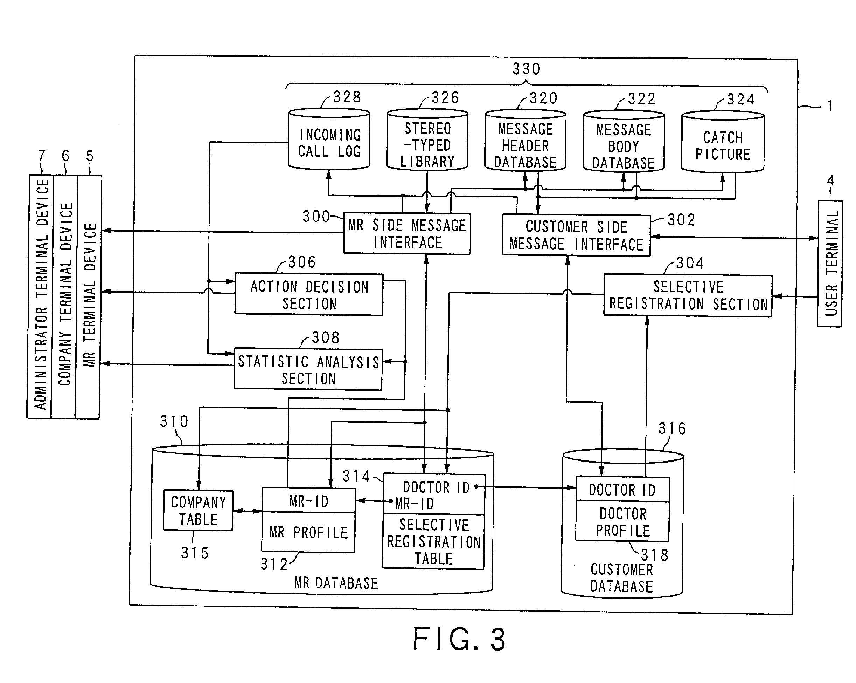

Fig.3 schematically shows the functions of the assisting server device 1. Insofar as the hardware aspect is concerned, this functional configuration may be implemented by, for example, a CPU (Central Processing Unit), RAM (Random Access Memory) and a hard disc, on which there is installed an application program having the assisting function. Hence, the functional blocks shown may be implemented in variable fashion by the combination of the hardware and the software.

The assisting server device 1 includes an MR side message interface 300, assisting the message preparation on the sides of the MR terminal device 5, company terminal device 6 and the administrator terminal device 7, a customer side message interface 302, assisting message preparation on the side of the healthcare people, and a selective registration section 304 accepting registration of the identifying information of the healthcare people or the MR. The assisting server device also includes an action decision section 306, suggesting an action to be taken for the healthcare people, for the MR terminal device 5, company terminal device 6 and the administrator terminal device 7, a statistic analysis section 308 for taking statistics of and supervising the state of contact by the MR to the registered healthcare people, and an MR database 310 supplied with personal data of the MR and having stored data correlating the MR and the healthcare people. The assisting server device also includes a user database 316, having stored personal data of the healthcare people and a message database 330 for supervising the messages between the MR and the healthcare people. The MR database 310, user database 316 and the message database 330 are indicated as database 2 in Fig.1, and are stored in e.g. the hard disc.

The MR database 310 includes an MR table 312, having stored the MR's private information, a selective registration table 314, for correlating the healthcare people and the MR, and a company table 315 for correlating the pharmaceutical manufacturing company and the MRs belonging to the pharmaceutical manufacturing company. The user database 316 also includes a user table 318 in which to store the personal data of the healthcare individual.

The selective registration section 304 accepts inputting of the MRID, which is an MR's identification code, from the user terminal device 4 of the healthcare individual. The selective registration section 304 extracts the user table 318, discriminated by the user ID of the healthcare people, from the user database 316, while extracting the MR table 312, identified by the MRID, from the MR database 310, to generate the selective registration table 314 in which the user table 318 is correlated with the MR table 312. When this selective registration table 314 has been generated, the MR, identified by the MRID, has been registered with the healthcare individual, identified by the user ID, such that the registered MR is able to take charge of the healthcare individual as a customer. The MR side message interface 300 enables a message to be transmitted from the MR to the healthcare individual, with the generation of the selective registration table 314 as an incentive. The selective registration table 314 also operates as a customer list file in which it is possible to record the memo pertinent to the registered healthcare individual. The MR formulates a message to the registered healthcare individual using this customer list file.

The MR side message interface 300 is an MR assisting interface enabling preparation, deletion and storage of messages transmitted by the MR to the healthcare people, as well as browsing, deletion and saving of messages received from the healthcare people. The header part of the message, prepared by the MR, is stored in a message header database 320, for supervising the status, such as time and date of transmission of a message or time and date the addressed healthcare individual has opened the message. The body part of the message is stored in a message body database 322. The MR is able to select his/her facial portrait or illustration image from a catch picture database 324 to use it as a portion of the picture guiding the message. The self-introducing text, message title or a catch phrase of the MR may be included in the guide picture to the message. The MR may also acquire suitable data from a stereotype library database 326, having stored therein stereotype text or stereotype link destination address, prepared for business by the company the MR belongs to, in order to use it for preparing messages. When the message prepared as described above is read by the addressed healthcare individual, an incoming call log database 328 holds the so read information as a log. This log may be used for summing the points as indices for checking the status of use by the healthcare individual. For example, the administrator of the present assisting system is able to afford privileges, such as revenue services, to the healthcare people as customers.

The customer side message interface 302 is a user interface assisting the healthcare people and which enables browsing, deletion or storage of a message a healthcare individual as user receives from the MR and a message transmitted from the healthcare individual to the MR. The customer side message interface 302 reads out a message from the MR, registered and approved by the healthcare individual from the message database 330, in order to provide it to the user terminal device 4 of the healthcare individual. When there is an incoming message from the MR, a picture guiding the message from the MR is initially read out from the catch picture database 324 and displayed, as later explained. When a guide picture displayed is clicked by the healthcare individual, a message linked to the picture is read out from the message body database 322 and displayed.

The message sent from the MR to the healthcare individual is termed a 'call', while a healthcare individual unfolding, that is, reading, the message, is termed an 'incoming'. For example, an 'incoming call' means a message from an MR unfolded and read by a healthcare individual.

When the message has been read by the healthcare individual, the customer side message interface 302 updates the status recorded in the message header to set it to a read state. When the healthcare individual has read the message, the customer side message interface 302 records an incoming call log, specifying when and which message has been read, in the incoming call log database 328, and adds a point interchangeable with privileges, such as revenue services or free services for the healthcare individual.

The message database 330 is a database accessed common by the MR and the healthcare individual as user. The message exchanged between the MR and the healthcare individual is managed by this sole message database 330. In this respect, the message exchange, carried out in the assisting system, differs from the scheme in which mail data is transmitted from a server of a source of transmission to a destination of transmission, as in the case of an ordinary E-mail.

The action decision section 306 analyzes the status of the message, sent from the MR to the healthcare individual, and decides on an action to be taken for the healthcare individual, to present it to the MR. The statistic analysis section 308 analyzes the grad of the MR, based on contact state to the healthcare individual, such as the number of messages sent by the MR to the healthcare individual, or the percentage of the message read by the healthcare individual, and presents the result of evaluations to e.g. the terminal device 5, company terminal device 6 or the administrator terminal device 7.

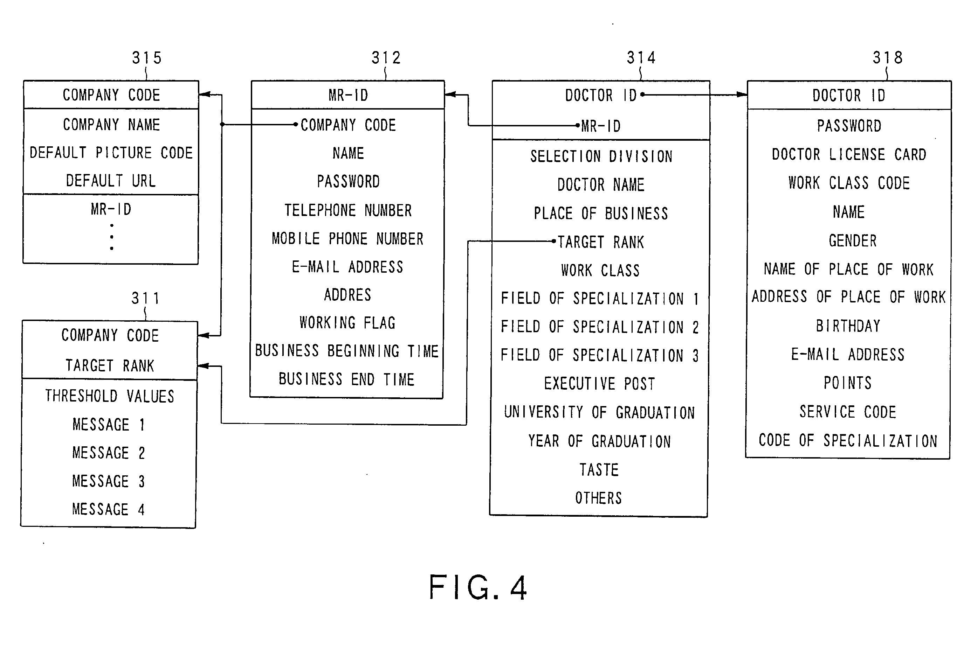

Fig.4 illustrates the data structure of the MR table 312, selective registration table 314 and the user table 318, as well as the correlation among these tables. The MR table 312, uniquely identified by the MRID, has stored therein data such as company code or name of a wholesale company, the MR belongs to, a password for the MR to access the assisting server device 1, MR's telephone number, mobile phone number, E-mail address or address, a work flag showing whether or not the MR is working, or data such as work start time or work end time of a place of business the MR is working in. The work start time or work end time is used not only for apprising the healthcare individual of the MR's work time but also for outputting an attention message to the user terminal device 4 of the healthcare individual reading 'The time is not working time, so prompt reply cannot be made' in case the healthcare individual tries to send a message in the off-duty time. The work flag is used for apprising the healthcare individual of the fact that the MR is now on duty, taking a vacation, or outing, and for outputting an attention message to the user terminal device 4.

Part of the information stored in the MR table 312 is saved in a MR list of the healthcare individual, as an MR profile, when the healthcare individual has registered an MR. The so saved information is provided to the healthcare individual. If set to laying open, an E-mail address is provided to the healthcare individual. If not, it is not provided to the healthcare individual. It is not the totality of the information of the MR table 312 that is disclosed to the healthcare individual who registered the MR. If the MR outs often, he/she may register the mail address of his/her mobile phone in the MR table 312 so that the assisting server device 1 will transmit a message from the healthcare individual to the mail address of the MR's mobile phone.

The user table 318, uniquely identified by the user ID, has stored e.g. a password for a doctor to access the assisting server device 1, a doctor license code, business type, name, gender, name and address of place of business, E-mail address, points, code of services of medical care or the code of profession. The private information of the doctor, stored in the user table 318, is not disclosed to the MR, excepting e.g. his/her name and name of the place of business.

The selective registration table 314 correlates the user table 318 of the healthcare individual with the MR table 312 of the MR in case the doctor has registered and approved the MR, and may uniquely be discriminated by the MRID of the MR table 312 and by the user ID of the user table 318. The selective registration table 314 has columns for the MR to enter a section of selection as to in which position of the sponsor frame 36, as later explained, the guide picture of the message from the MR is to be shown, and memos concerning the doctor, including the name and the place of business of the doctor, target ranks specifying the rank of importance of the customer, business types, field of specialization, posts, university of graduation, year of graduation, and tastes. It is noted that the section of selection is decided on by the doctor side and cannot be set on the MR side. Since the doctor's information is entered by the MR, it is not necessarily coincident with the doctor's private information stored in the user table 318. The selective registration table 314 is also used as an MR's customer list file.

For each MR belonging to the pharmaceutical manufacturing company, there are provided as many selective registration tables 314 as approved by the healthcare people. For the MR in charge of the company terminal device 6 of the pharmaceutical manufacturing company, there are provided a number of selective registration tables 314 equal to the number of the healthcare people taken charge of by the MRs belonging to the company. For the administrator of the present system, there are provided a number of selective registration tables 314 equal to the number of the healthcare people who have made user registrations.

The company table 315, referenced from the MR table 312, has stored therein the name of the pharmaceutical manufacturing company, the MR belongs to, a code specifying a default picture, such as Company's logotype, and a default URL (Uniform Resource Locator) of e.g. the Company's homepage. In the company table 315, there are registered MRs belonging to the company. That is, the company table 315, linked to the MR table 312, renders it possible to check to which place of business a particular MR belongs to, the grad of each MR, and so forth. Moreover, the company table 315, supervising the MRs, belonging to the company, is able to manage the totality of the customers, viz. healthcare people, taken care of by the company. The company terminal device 6 is able to select the MR, belonging to the company, under preset conditions for selection, such as place of business, as well as to select the customers of each MR, under preset conditions for selection, such as domain of specialization. The company terminal device then transmits a message to the healthcare individual, who met the selected condition for selection, in the name of the company or of the MR in charge of the healthcare individual as the destination of transmission.

An action data table 311, which relies upon the company code and a target rank of the selective registration table 314 for discrimination, has stored the criteria for decision of an action to betaken for the customer and the contents of the action. In this action data table 311, there are stored threshold values, used as criteria for actions, and four sorts of messages, stating the contents of the actions. The method of using these data will be explained subsequently.

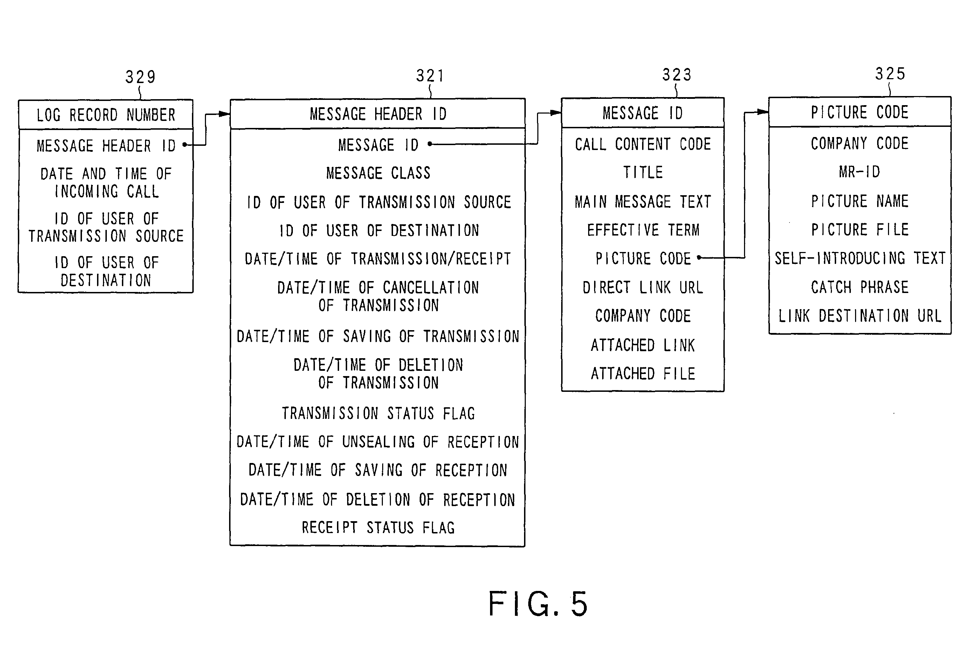

Fig.5 illustrates the data structure of a message header record 321, a message body record 323, a catch picture record 325 and an incoming call log record 329 and the relationship of cross-reference among these records. The message header record 321, stored in the message header database 320, is uniquely identified by a message header ID, and has stored a message ID, a message class, transmission source user ID, a destination user ID, date and time of reception/ transmission, date and time of message cancellation or storage on the transmitting side, transmission status flag, date and time of deletion, time and date of message opening on the receiving side, and time and date of saving or deletion and a receiving status flag.

It is noted that the message ID is a pointer indicating the message body record. The message class indicates whether the message is a message addressed to the healthcare individual who is a usual customer, or a system message transmitted to the MR by the assisting server device 1 for notification purposes. The system messages may be enumerated by a notification for MR registration, MR deletion or for message unsealing. The transmission source user ID and the destination user ID may be a MR's user ID and the doctor's user ID, respectively. In the case of the system message, the transmission source user ID is an administrator ID.

The message body record 323, stored in the message body database 322, is uniquely identified by a message ID, and has stored a call content code, a message title, message text, term of validity, a picture code, a direct link URL, a company code, an annexed link, and an annexed file. The picture code is the code of a catch picture and denotes a catch picture record. The direct link URL is a link destination URL, specified by the MR, and the annexed link is a stereotyped link provided on the company side. To this stereotyped link may be attached a picture file or text data, in addition to the URL. The annexed file is e.g. a document file attached to the message.

The catch picture record 325, stored in the catch picture database 324, is uniquely identified by the picture code, and has stored the company code, MRID, picture name, picture file, MR's self-introduction text, catch phrase and the URL of the link destination.

The incoming call log record 329, stored in the incoming call log database 328, is uniquely identified by the record log number, and has stored a header ID of the message, unsealed by the healthcare people, such as doctor, the date and time of the incoming call, indicating the unsealing date and time of the message, the user ID of the source of transmission and the user ID of the destination. Using the incoming call log record 329, the points added for the healthcare people, such as doctor, is determined by the number of times of unsealing of the message.

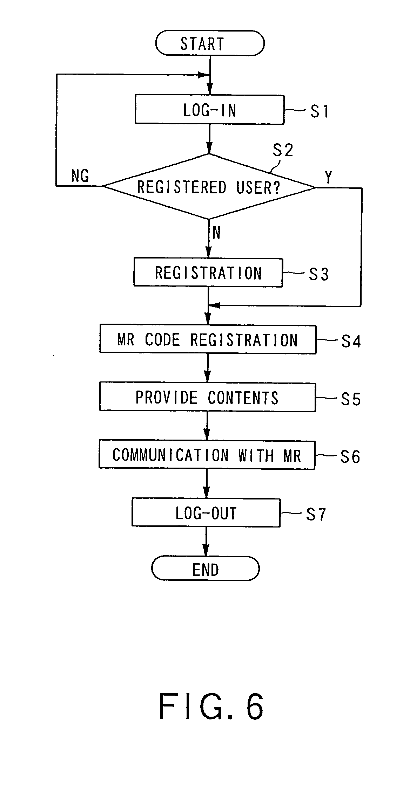

The foregoing is the overall configuration of the assisting system. The processing of the system will now be specifically explained. The sequence of operations for registration in the assisting server device 1 on the part of the healthcare people, using the user terminal device 4, will now be explained with reference to Fig.6. This processing is initiated on detection by the assisting server device 1 of the access from the user terminal device 4.

The assisting server device 1 transmits a login picture image, prompting the inputting of a user ID and a password, to the user terminal device 4 over the network 3 (step S1). In this login picture image, displayed on a monitor of the user terminal device 4, there are provided, for example, a column for entry of the user IR and the password, a transmitting button, instructing the transmission of e.g. the user ID, as entered, and a button for notifying that the user is an unregistered user. The healthcare individual, who is a registered user, operates the user terminal device 4 to enter the user ID and the password, using operating parts, such as a keyboard, a mouse or a ten-key, in an input column of a login picture image, displayed on the monitor, and clicks a transmitting button. If the user is an unregistered user, he/she uses an operating part to click a notification button in the login picture image. When the transmitting button or the notification button is clicked, the user terminal device 4 transmits the user ID and the password, as entered, or the unregistered user notification over the network 3 to the assisting server device 1.

On receipt of the user ID and the password or the unregistered user notification, from the user terminal device 4, the assisting server device 1 in the state of waiting for receipt verifies whether or not the user is a registered user, based on the received contents (step S2). Specifically, on receipt of the user ID and the password, the assisting server device 1 collates it to the user profile recorded in the database 2 to verify whether or not the user who made the motion is a regular user. If the assisting server device 1 has determined that the user ID and the password is not regular (NG of step S2), the system reverts to the step S 1 to transmit the login picture image again to the user terminal device 4 which made the access.

On receipt of the unregistered user notification from the user terminal device 4 (N of step S2), the assisting server device 1 verifies that the healthcare individual who made the access over the user terminal device 4 is the unregistered user, and accordingly proceeds to a step S3. For prompting the accessing user to make a user registration, the assisting server device 1 transmits a user registration picture image over the network 3 to the user terminal device 4 (step S3).

In the user registration picture image, displayed on the monitor of the user terminal device 4, there are provided, in addition to a column for entry of the user ID and the password, in which the user is free to set an optional letter or numeral, a transmitting button, a column for entry of service codes, name, gender, date of birth, type of business, type of services or the district of services, as acquired from the MR, and a transmitting button for instructing the transmission of the user ID entered. The column of the work type is for entry of work type, such as doctor working in a hospital, doctor in private business, nurse, pharmacist, or radiological technician, and the column for services is for entry of medical services, such as internist or surgeon. When the user enters a user ID, a password or a service code, using an operating section, in a preset input column of a user registration picture image, demonstrated on the user terminal device 4, and clicks the transmitting button, the user terminal device 4 transmits private data, such as user ID, password or the service code, as entered over the network 3, to the assisting server device 1.

The assisting server device 1 records, that is, registers, the user ID, for example, from the user terminal device 4, as user profile, in the user table 318 of the user database 316. The user of the user terminal device 4 then becomes the registered user of the present system. The assisting server device 1 issues the authentication information, testifying to the user of the user terminal device 4 being the registered user, to the user terminal device 4, which is being operated by the registered user. The authentication information, thus issued, is transmitted to the user terminal device 4 and stored in e.g. a hard disc of the user terminal device. As typical of this authentication information is the Cookie. The assisting server device 1 records the issued authentication information in the user table 318 in association with the user's user profile.

After the user registration, the user registers the MRID of the MR, exchanging the messages, in a designated form, dedicated to the use by the user (step S4). This designated form is supervised by the assisting server device 1. A plural number of MRIDs may be registered in this designated form. The user is able to receive only messages transmitted by the MR who registered the MRID in the designated form. That is, if the user, as the healthcare individual, has not registered the MR's MRID in the designated form, the aforementioned selective registration table 314 is not generated, and hence the MR is unable to send a message to the user. Consequently, a user is able to prevent a message from being sent from an unintended MR by not registering the MRID of the user in the designated form.

Hence, by registering the desirable MRID and approving the MR specified by this ID, the healthcare individual is able to establish a one-to-one communication with the MR. From the MR's perspective, the MR is able to do marketing, subject to permission given by the customer, viz. the healthcare people (so-called permission marketing), by having his/her MRID registered by the healthcare people.

Meanwhile, the user, who registered in the present system, may add, change or delete the contents of user registration, or add or delete the MRID, from time to time, from the user terminal device 4.

In the step S2, the assisting server device 1 receives the user ID and the password, transmitted from the user terminal device 4, and collates it to the user profile recorded in the database 2. If it is verified that the user accessed is a regular user (Y of the step S2), the assisting server device determines that the user is the registered user, and skips the processing of the step S3.

The assisting server device 1 then reads out the user profile from the user table 318 of the user database 316 and, based on this user profile, provides the user terminal device 4 with the contents for the healthcare people (step S5). The message from the MR is then supplied to the user terminal device 4 (step S6). The user terminal device 4, which has received the data over the network 3, demonstrates the contents, transmitted from the assisting server device 1, on the monitor, while making demonstration prompting the user to communicate with the approved MR. The user terminal device 4, operated by the user, logs out from the assisting server device 1 (step S7) to terminate the sequence of operations. Meanwhile, with the present assisting server device 1, the user terminal device 4 accesses using the browser. Hence, the session may automatically be closed by providing timeout, without prompting logout on the part of the user terminal device 4.

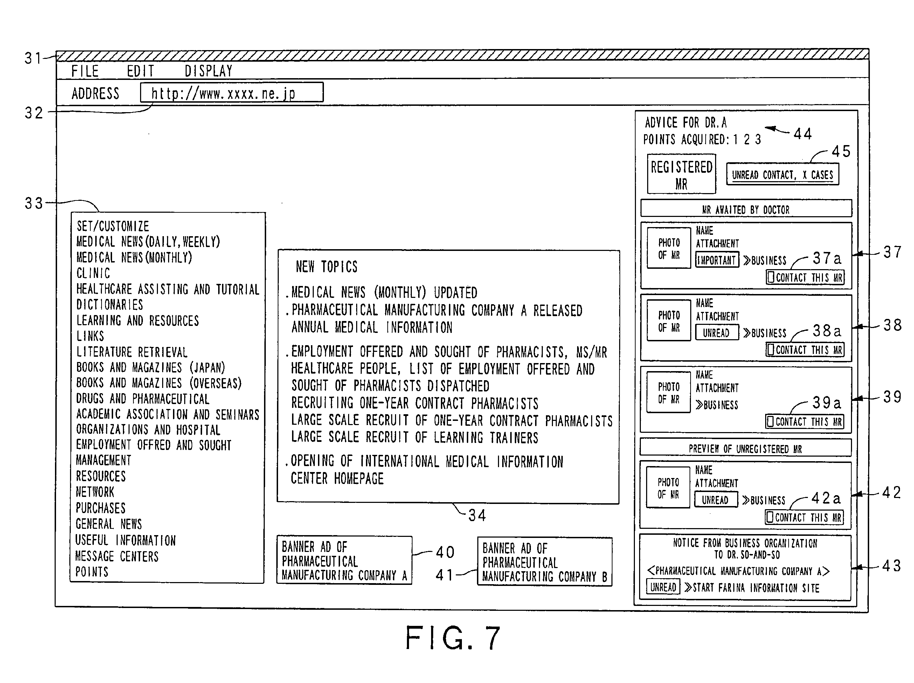

Fig.7 shows typical demonstration on a WWW browser window 31 as displayed on a monitor of the user terminal device 4 operated by the healthcare individual as a customer. In an address input column 32 of the WWW browser window 31, the URL of the Web page being accessed is entered, and the URL of the Webpage currently displayed is demonstrated. Here, a doctor inputs the URL of the assisting server device 1, using an operating section, to access the assisting server device 1. In a navigation frame 33, information items for demonstration on a main frame 34 are displayed. When the user clicks an item displayed in the navigation frame 33, the heading of the information of the clicked item is demonstrated on the main frame 34. In the example of Fig.7, the heading of 'up-to-date topic' for advising the up-to-date healthcare information and 'information' for advising the user of the information concerning the assisting system is displayed in the main frame 34.

In the present example, the string of letters/ characters of the heading of the information, displayed on the main frame 34, such as 'pharmaceutical manufacturing company A releases annual medical information' is linked to a page stating the 'annual medical information'. Meanwhile, the URL of the page of the link destination may be a lower-layer directory of the assisting server device 1 which is the site of interest. Or, it may be any outer suitable site.

The term 'link' is used herein for denoting that, in the above example, if the string of letters/ characters 'pharmaceutical manufacturing company A releases annual medical information' is clicked, the 'annual medical information' related thereto is displayed.

The sponsor frame 36 includes sponsor boxes 37 to 39, provided in a single vertical line on e.g. the right side in the browser window 31. These boxes 37 to 39 are linked to a page for bidirectional communication for message transmission/ reception between the user and the MR. On top of the sponsor frame 36, there is provided a guide display 44 for guiding the healthcare people. For example, if 'information for Dr.So-and-So' is demonstrated here, the number of unread messages and the number of acquired points are displayed. These sponsor boxes 37 to 39 are each a domain dedicated to a preset pharmaceutical manufacturing company and, when a message is being sent from the MR of e.g. the preset pharmaceutical manufacturing company to the healthcare individual, a facial portrait, name and the sort of the business of the MR is displayed in the domain. In the sponsor boxes 37 to 39, a status indicator 45, indicating the possible presence of the unread messages, as well as the rank of importance of the message in charge, is displayed. There are also provided contact buttons 37a, 38a and 39a for allowing direct message transmission to each MR. It is noted that, lacking the message from the MR, a catch picture, such as house mark of the predetermined pharmaceutical manufacturing company, is displayed in each of the sponsor boxes 37 to 39. With these sponsor boxes 37 to 39, it is possible to make PR of the pharmaceutical manufacturing company, an MR belongs to, when the MR is demonstrated. The sponsor boxes 37 to 39 are linked to the information as set by the associated MR, for example, the detailed information pertinent to a message. The detailed information is demonstrated by a doctor clicking with e.g. a mouse of the user terminal device 4.

The sponsor frame 36 is provided with a box 42 of an unregistered MR not approved by the healthcare individual. In this box 42 of an unregistered MR, there are demonstrated e.g. the facial portrait, name and the business of the unregistered MR relevant to the healthcare individual. For example, there is displayed, in the box 42 of the unregistered MR, the information pertinent to the unregistered MR introducing e.g. pharmaceuticals for the field corresponding to the field of specialization of the healthcare individual. The state of unread messages is also displayed. In the box 42 of the unregistered MR, there is also provided a registration button 42a in order to permit immediate registration of the MR whenever the healthcare individual is interested in the MR.

Moreover, there is provided below the box 42 of the unregistered MR of the sponsor frame 36 an ad box 43 for a sponsoring business organization in which to display the unread state of the ads. There is also provided a registration MR button 46 for having an overview of the registered MRs.

It is noted that the number of the sponsor boxes 37 to 39, demonstrated on the sponsor frame 36, is not limited to three, while the position of the sponsor boxes 37 to 39, demonstrated on the browser window 31, is not limited to the right side of the browser window 31.

If, in the picture image of Fig.7, displayed on the monitor of the user terminal device 4, a user has made operations for changing the picture displayed on the monitor, using an operating section, such as by the user clicking an information item displayed in the navigation frame 33, clicking the heading of the information displayed on the navigation frame 33, clicking the heading displayed on the main frame 34, clicking the sponsor boxes 37 to 39 of the sponsor frame 36, clicking banner ads 40, 41, clicking the box 42 of an unregistered MR, or by entering the URL in the address input column 32, the URL entered in the address input column 32 or the URL linked to the clicked site is transmitted from the user terminal device 4 to the assisting server device 1 over the network 3, such as the Internet. The assisting server device 1 is responsive thereto and transmits the contents in a location specified by the URL or the address information received to the user terminal device 4. On receipt of new contents, transmitted from the assisting server device 1, the user terminal device 4 displays the contents on a monitor of the display system. A typical display of the new contents, received in this manner by the user terminal device 4, will now be explained.

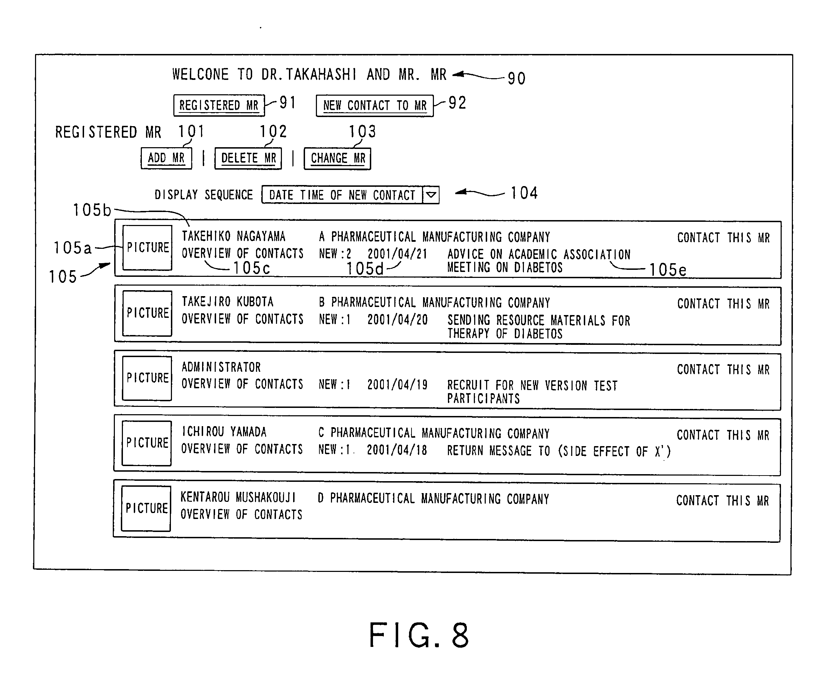

Fig.8 illustrates a page of registered MRs, demonstrated on the monitor of the user terminal device 4 on clicking a registered MR button 46 of the sponsor frame 36. This registered MR page is a list of MRs approved by the healthcare individual for the healthcare individual as a customer to view received new messages at a glance, that is, a list of registered MRs. In an upper column of the list of registered MRs, there is a guide display 90 for guiding the healthcare people and, below this column, there are provided a registered MR button 91 for accessing the page for registration of the MR, that is, for accessing the page of Fig.8, and a new contact button 92 for accessing a page for new contact communication with the MR. It is noted that the guide display 90, registered MR button 91 and the new contact button 92 are used common in the pages for communication with the MR and hence are not shown in subsequent drawings.

In the registered MR page, there are provided an MR addition button 101 for accessing a page for adding the MR, the healthcare individual intends to contact, a delete button 102 for accessing a page for deleting the approved MR, and a change button 103 for accessing the page for changing the display sequence of the boxes 37 to 39 displayed on the sponsor frame 36 shown in Fig.7. The registered MR page is provided with a sorting section 104 for sorting the display sequence of displayed MRs. This sorting section 104 is e.g. a pulldown menu for selecting the sort conditions of the MRs displayed in the lower column, according to the date and time of receipt of the messages, the sequence of names of MRs or the companies the MRs belong to. When the sort condition has been selected, the MRs are sorted and displayed according to the selected conditions.

The registered MR page is provided with an MR list display 105 for demonstrating a list of MRs having new messages. The MR list display 105 is partitioned from one MR to another. In each column, there are displayed a catch picture 105a, such as a facial portrait of each MR, names 105b of the MRs, a contact list 105c with this MR, date and time of the latest message 105d and titles of the latest message 105e. When the name of the MR 105b is clicked, the MR's private information page, showing the private information of the MR in charge, is displayed, whereas, when the title 105e is clicked, the receipt contact content page is displayed.

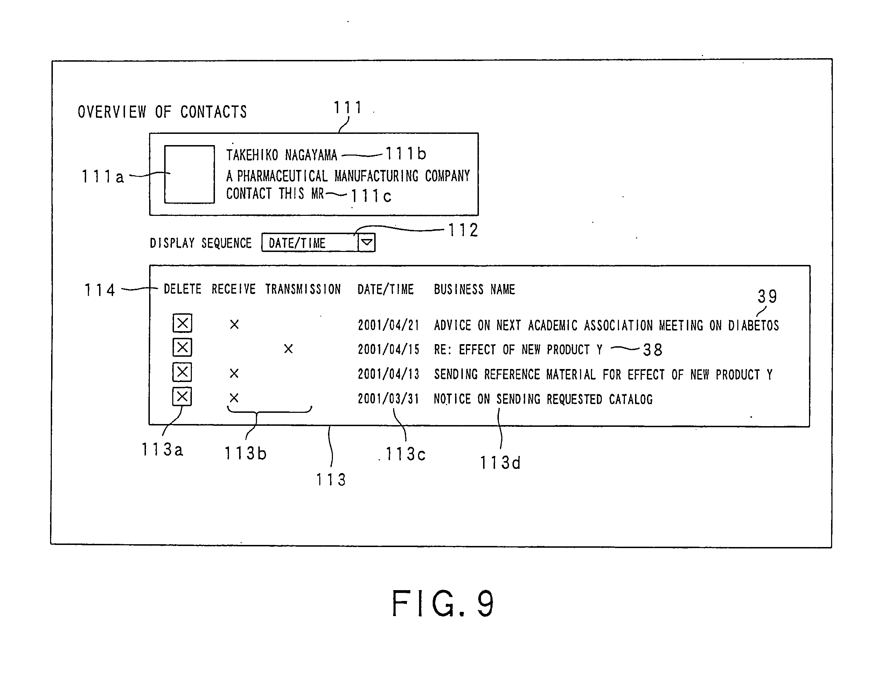

When the name of the MR 105b of the MR list display 105 of the registered MR page, shown in Fig.8, is clicked, a contact list page, displaying the contact list with the MR, is displayed, as shown in Fig.9. In this contact list page, there is provided an MR box 111 displaying the selected MR. In this MR box 111, there are displayed a catch picture 111a, such as an MR's facial portrait, an MR's name 111b, and a contact button 111c for formulating a message for this MR. When the MR's name 111b is clicked, the MR's private information page, demonstrating the private information of the MR in charge, is displayed, whereas, if the contact button 111c is clicked, a contact content forming page is displayed.

The contact list page is provided with a sorting section 112 for sorting the display sequence of the messages displayed. The sorting section 112 is e.g. a pulldown menu for selecting the sort conditions of the MRs displayed in the lower column, according to the sort conditions, such as in the receiving order, transmitting order, in the time-and-date order or in the sequence of businesses. When the condition is selected, the title of the message is sorted and displayed according to selected conditions.

The contact list page is further provided with a list display section 113 for displaying a list of message titles. This list display section 113 demonstrates a deletion box 113a for selecting a message for selection, a transmission/ receipt discriminating section 113b for discriminating whether the message in charge is a message for receipt or the message for transmission, a message transmitting/ receiving time and date 113c, and a message title 113d. On clicking a delete button 114, a message, in the check box 113a of which a check mark has been entered, may be deleted.

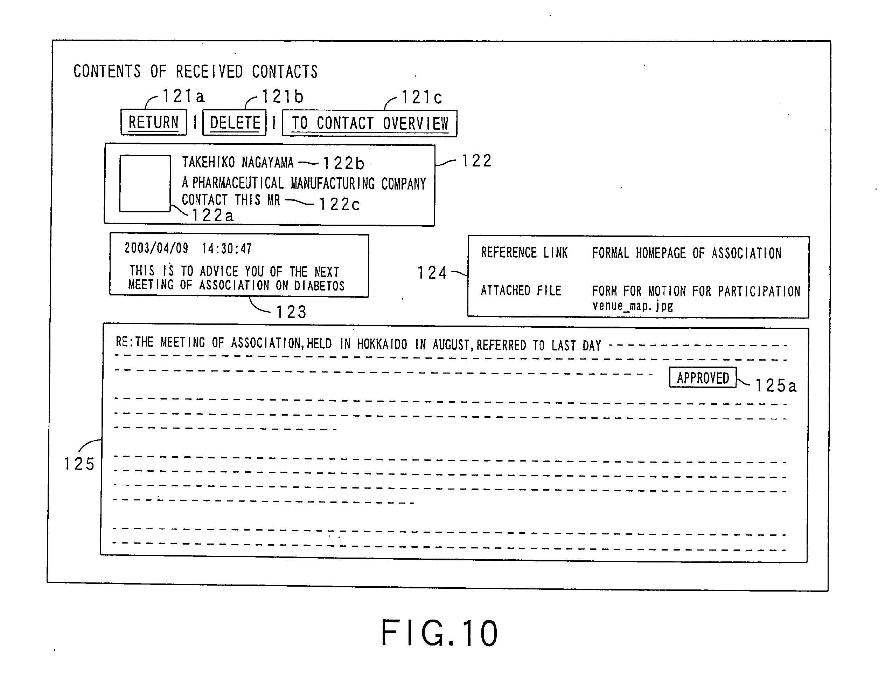

When the title 105e of the registered MR page, shown in Fig.8, or the title 113d, shown in Fig.9, is clicked, a receipt contact content page, shown in Fig.10, is displayed. The receipt contact content page is a page for confirming the main text of the message transmitted from a specified MR. This receipt contact content page is provided with return button 121a for displaying a contact content forming page, for formulating a return massage for the sent message, a delete button 121b for deleting this message, and a contact list page 121c for displaying the contact list page shown in Fig.9.

The receipt contact content page is provided with an MR box 122 in which to display an MR as a message sender. In this MR box 122, there are displayed a catch picture 122a, such as MR's facial portrait, an MR's name 122b and a contact button 122c for forming a message for this MR. When the MR's name 122b is clicked, the MR's private information page, demonstrating the MR's private information, is displayed, whereas, if the contact button 111c is clicked, a contact content forming page is displayed.

The receipt contact content page is also provided with an annexed information display section 123 for demonstrating the information annexed to the message, such as title or date of the selected title, and also with a relevant information display section 124 for demonstrating an attached file or a resource link for accessing the information relevant to the message, such as an official homepage of an academic association. Below a column of the annexed information display section 123 or the relevant information display section 124, there is provided a message display section 125 for demonstrating the main message.

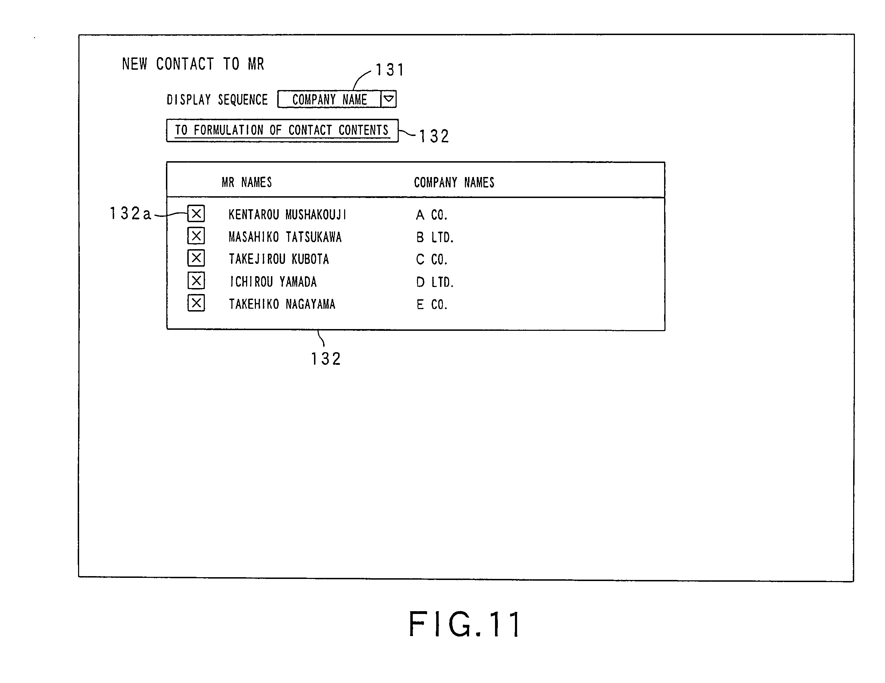

When the new contact button 92, shown in Fig.8, is clicked, a new contact page for the MR is displayed, as shown in Fig.11. In this new contact page, there is demonstrated a list of MRs approved by the healthcare people. Specifically, this new contact page is provided with a sorting section 131 for sorting the display sequence of the registered MRs displayed. The sorting section 131 is e.g. a pulldown menu and an MR displayed in a lower column may be selected in a sorting sequence, such as in the sequence of names or companies. When the sorting sequence has been selected, the MR's names are sorted and displayed under the so selected sorting condition.

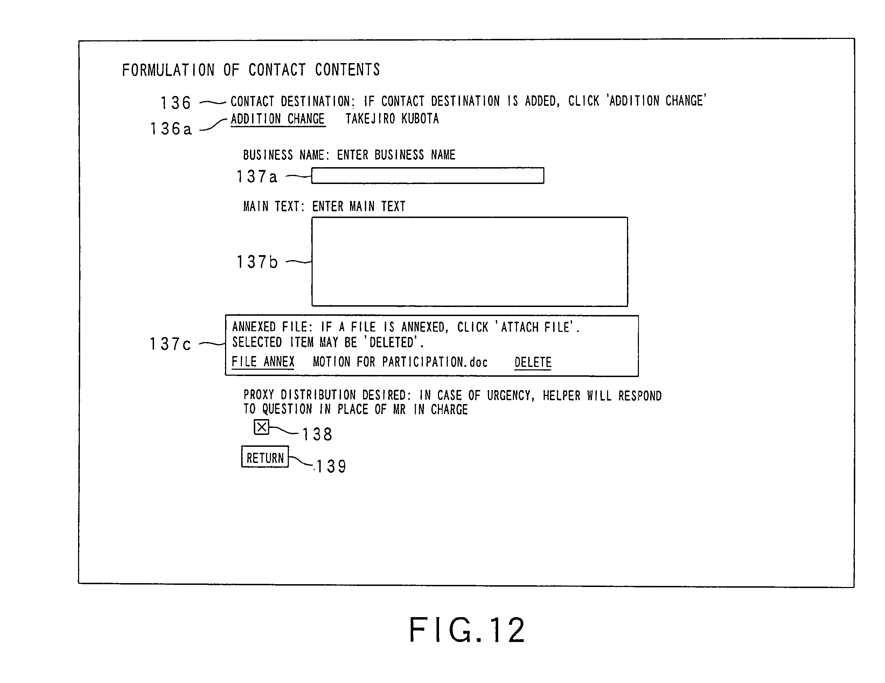

In the new contact page, there is also provided a list display section 132 for displaying a list of MRs registered by the healthcare people. In this list display section 132, there are provided check boxes 132a along with the MR's names and the MR's company. When the healthcare individual, as a user, clicks a contact content forming button 133, a contact content forming page is displayed, as shown in Fig.12. This contact content forming page is displayed not only when the contact content forming button 133 is clicked but also when the contact button 122c shown in Fig.10 is clicked.

The contact content forming page is provided with a transmission destination display section 136, demonstrating the destination of message transmission, as shown in Fig.11. This transmission destination display section 136 is provided with an addition change button 136a for displaying a new contact page, shown in Fig.11, for changing the addition of the destination of transmission. There are also provided a title inputting section 137a for inputting the message title, a main text inputting section 137b for inputting the main message text, and a relevant information inputting section 137c for designating and displaying the a file annexed to the message. There are furthermore provided a check box 138 to be checked when a proxy response is desired in place of the MR in charge in an emergency, and a transmitting button 139 for transmitting a message.

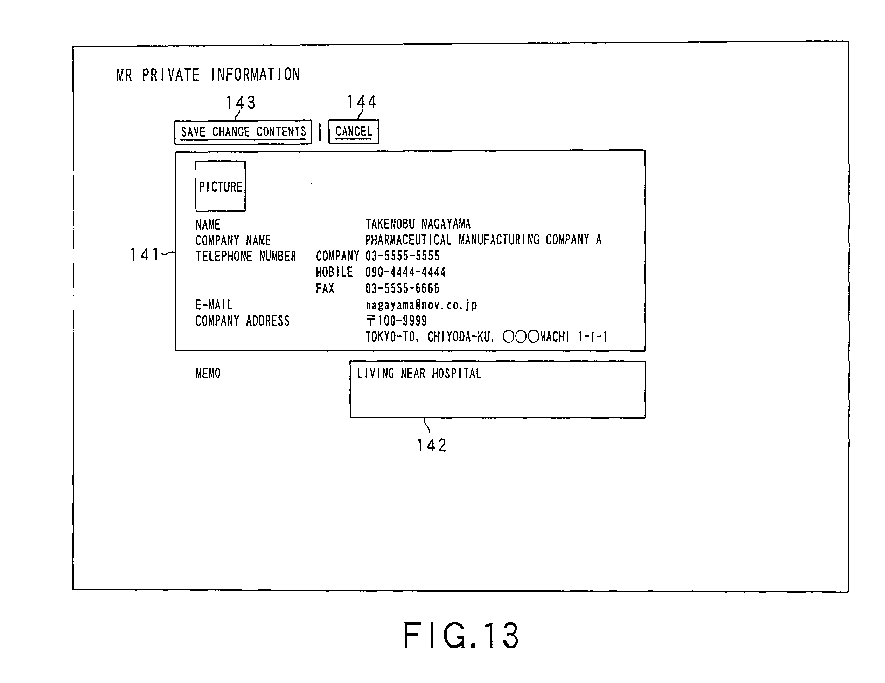

When the name of the MR 105b of the registered MR page, shown in Fig.8, the MR's name 111b of the contact list page, shown in Fig.9, or the MR's name 122b of the receipt contact content page, shown in Fig. 10, are clicked, the MR's private information page, shown in Fig.13, is displayed. This MR's private information page is provided with a catch picture, such as the MR's facial portrait, the name of the company, the MR belongs to, the telephone number of the company, as a site of contact, mobile phone number, fax number, address or the address of the company, and with a memo inputting section 142 in which the healthcare individual as a customer may enter the information pertinent to the MR by memo. There are further provided a change content save button 143 for saving change of the contents of the statement of the memo inputting section 142 and a delete button 144 for deleting the changed content.

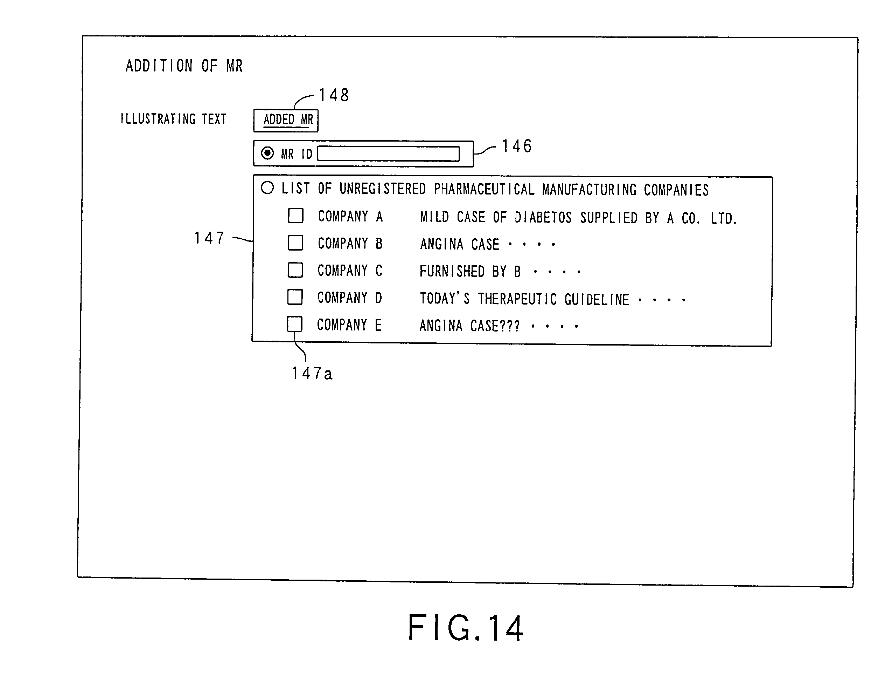

When the MR addition button 101 of the registered MR page, shown in Fig.8, is clicked, the MR addition page, shown in Fig.14, is displayed. In this MR addition page, these are provided a first inputting section 146 for directly adding an MR with MRID, and a second inputting section 147 for adding an MR by the company. The first inputting section 146 is selected when the healthcare individual approves an MR with an MRID informed on the first interview of the healthcare individual with the MR, and the MRID is entered. The second inputting section 147 is selected when for example the healthcare individual is interested in a particular pharmaceutical manufacturing company and intends to acquire the information from that company. In the second inputting section 147, a list of pharmaceutical manufacturing companies, to which belong MRs not approved by the healthcare individual, is displayed, and there are provided check boxes 147a. By checking one of the check boxes 147a, the healthcare individual is able to select the preset pharmaceutical manufacturing company and, by further clicking an MR addition button 148, is able to approve the selected MR and subsequently may contact this MR. That is, the added MR is displayed in the registered MR page shown in Fig.8.

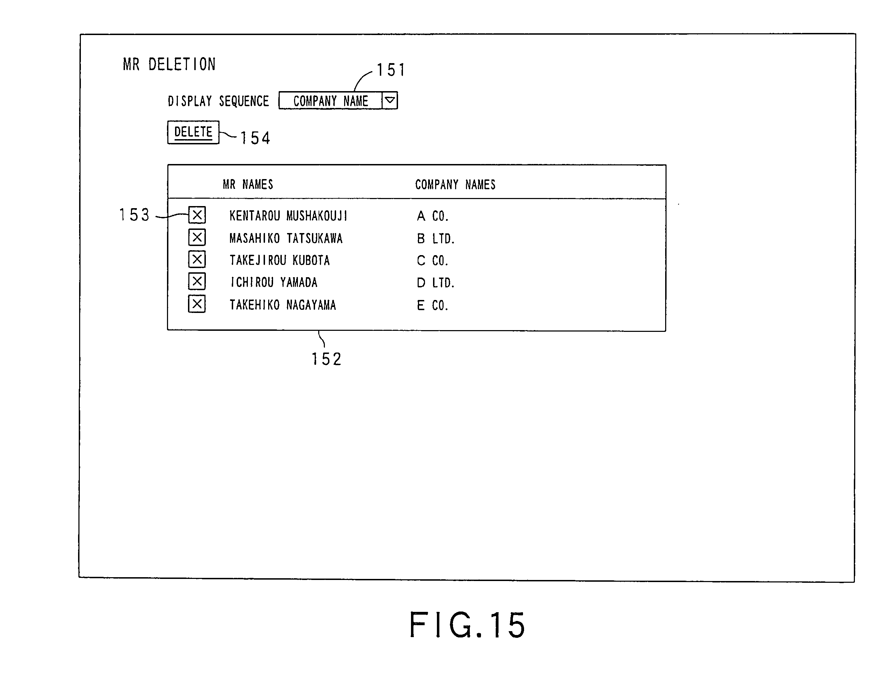

When the MR delete button 102 of the registered MR page shown in Fig.8 is clicked, the MR deletion page is displayed, as shown in Fig.15. In this MR deletion page, there is already provided a sorting section 151 for sorting the display sequence of MRs already approved by the healthcare individual. The sorting section 151 is e.g. a pulldown menu in which a sorting sequence for MRs, displayed in the lower column, indicated in a sequence of the MR's names or of the companies the MRs belong to, may be selected. When the condition has been selected, the MRs are sorted under the selected conditions and displayed.

In the MR deletion page, there is provided a list display section 152 for displaying the list for displaying a list of approved MRs. In the list display section 152, the names of the MRs already registered with the healthcare individual, and the names of the companies, are displayed in a list, and the check boxes 153 are provided from one MR to another. The healthcare individual is able to select the MRs to be deleted by checking the check boxes 153, and is also able to delete the approved MR from registration by clicking the approved MR, by checking the check box 154.

In addition, if the change button 103 on the registered MR page shown in Fig.8 is clicked, it is possible to display the MR change page for changing the display sequence of the boxes 37 to 39 demonstrated on the sponsor frame 36 shown in Fig.7. This change page is provided with a pre-setting display section 156, demonstrating the pre-setting of the boxes 37 to 39, and a list display section 157 for displaying a list of the approved MRs. The list display section 157 is provided with a check section 158 for setting the positions of the boxes 37 to 39. By checking upper, median and lower check sections 158, the healthcare individual is able to determine the display sequence of the boxes 37 to 39 demonstrated in the sponsor frame 36 shown in Fig.7. When a change content save button 159 is clicked, the setting contents are changed and the display on the pre-setting display section 156 is changed, while the MRs displayed in the boxes 37 to 39 are changed. When a cancel button 160 is clicked, the change contents are canceled.

Meanwhile, in the company terminal device 6, operated by a person in charge, belonging to a division comprehensively managing the MR of the pharmaceutical manufacturing company, the MR belongs to, the MR management page, for registering or deleting the MR or for changing the contents of registration, may be accessed, as shown in Fig.1. Specifically, the assisting server device 1 transmits a login picture image, for the company terminal device 6 to access the page supervising the MR, to the company terminal device 6 over the network 3. The login picture image received is demonstrated on the monitor of the company terminal device 6. This login picture image prompts the administrator to enter the administrator ID and the password in a preset column. The administrator, operating the company terminal device 6, inputs the administrator ID and the password in an input column of the login picture image, displayed on the monitor, and clicks the transmitting button. With the transmitting button thus clicked, the company terminal device 6 sends the administrator ID and the password, as entered, to the assisting server device 1 over the network 3.

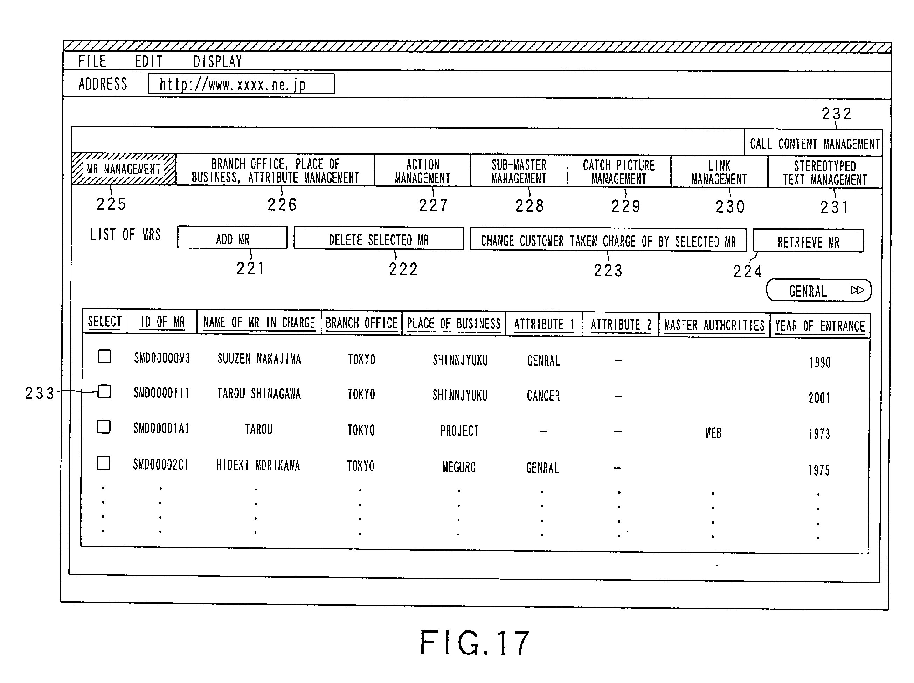

On receipt of the administrator ID and the password from the administrator terminal device 7, the assisting server device 1 in the receipt standby state refers to the received contents and to the database 2 to verify whether or not the user is a registered administrator. When the user is determined to be the regular administrator, the assisting server device 1 allows the MR management picture image, shown in Fig.17, to be displayed on the monitor of the company terminal device 6. That is, the assisting server device 1 accesses the company table 315 of the database 2 to permit the MRs, supervised by the administrator of the company terminal device 6, to be displayed in a list on the monitor of the company terminal device 6.

Fig.17 shows an MR management page displayed on the monitor of the company terminal device 6. In this MR management page, the MRs supervised by the administrator are displayed in a list, and MRID, MR's names, the branch office the MR belongs to, the place of business the MR belongs to, attributes 1 and 2, such as MR's specialization, master rights and year of entry to the company, are stated from one MR to another. In the MR management page, there are provided a tag 221 for accessing the page, the MR supervised is added to, a tag 222 for accessing a page for deleting a selected MR, a tag 223 for accessing a page of changing the customer, taken charge of by an MR selected, and a tag 224 for accessing a page for retrieving a preset MS. In the MR management page, there are furthermore provided a tag 225 for accessing a page for managing the MR, a tag 226 for accessing a page for supervising the attributes of a branch office or a place of business, a tag 227 for accessing a page for managing the action of each MR, a page 228 for accessing a page for managing a sub-master, a tag 229 for accessing a page managing a catch picture used for the MR to formulate a message, a tag 230 for accessing a page for managing a link used by the MR in preparing a message, a tag 231 for accessing a page for managing a stereotyped text used by the MR in preparing a message, and a tag 232 for accessing the page for managing the call contents.

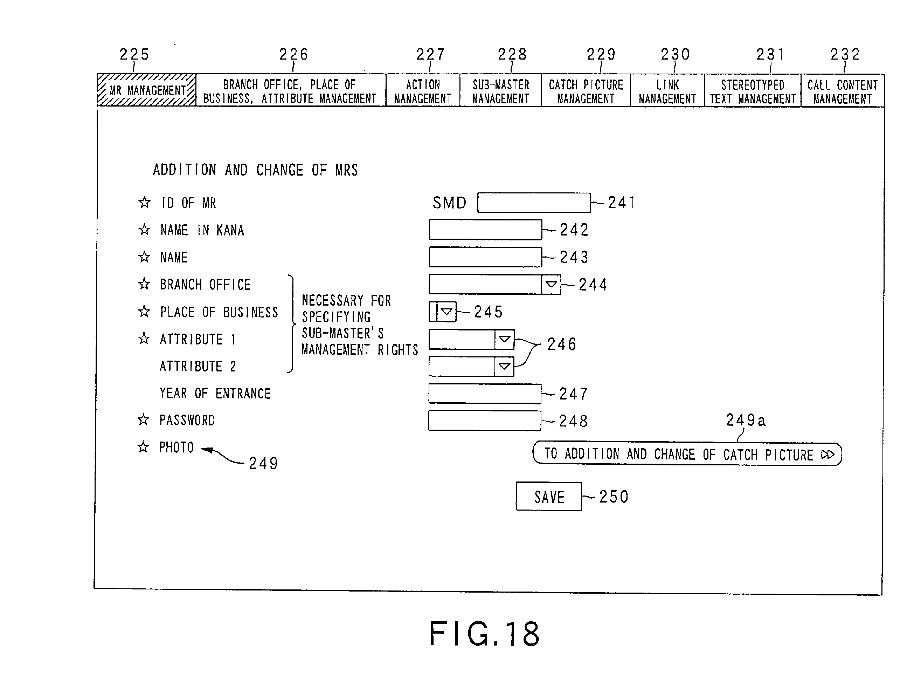

When the tag 221 for adding the MR is clicked, an MR addition change page, shown in Fig.18, is displayed. This MR addition change page is provided with an MRID input section 241, supplied with an ID of an MR, a kana name inputting section 242, supplied with the MR's name with kana, a name inputting section 243, supplied with the MR's name with kanji, a branch office inputting section 244, supplied with an MR's branch office, a business place inputting section 245, supplied with a place of business, the MR is working in, an attribute inputting section 246, supplied with the MR's attribute, an entrance year inputting section 247, supplied with the MR's year of entrance, a password inputting section 248, supplied with the MR's password, and a photo inputting section 249, supplied with a MR's photo. In the photo inputting section 249, the catch picture, displayed in the sponsor boxes 37 to 39, may be selected, by clicking an addition change button 249a of the catch picture.

If, as a check mark is entered in the check box 233, associated with one of the MRs, displayed as a list, the tag 221 for adding an MR is clicked, the preset contents are displayed in the inputting sections 241 to 249 in the MR addition page. If the MR addition tag 221 is clicked, as a check mark has been entered in none of the check boxes, the input sections 241 to 249 remain void in the MR addition change page.

In the MRID input section 241, the administrator is able to enter an optional code and, lacking the MRID input, numbering is made automatically. In the kana name inputting section 242, which is void in new addition, the MR's name in kana is entered. In case of a change, a preset MR's name is entered in kana. In the name inputting section 243, which is void in new addition, the MR's name is entered. In case of change, the preset MR's name is entered. The branch office inputting section 244 and the business place inputting section 245 are each e.g. a pulldown menu and are void in new addition. The branch office or the place of business may be selected from the pulldown menu. In case of change, the name of the branch office or the place of business as preset is displayed. The attribute inputting section 246 is void in new addition and attributes may be selected from the pulldown menu. In case of change, preset attributes are displayed. In the entrance year inputting section 247, the MR's entrance year may be entered in A.D. and, in case of change, the preset entrance year is displayed. In the password inputting section 248, which is void in new addition, the preset password is displayed.

With the MR addition change page, the MR addition change comes to a close when a save button 250 is clicked after inputting to the respective inputting sections 242 to 249. The MRIDs issued are in one-to-one relationship with respect to real MRs and each one MRID is accorded to each MR. There are two methods in setting the MRs. One issues MRIDs to real MRs of the main office and MRs in charge, with the other inputting sections 241 to 249 making registrations of the names of the real MRs. The other issues MRIDs for real MRs in charge, for registering the MRs, with the other inputting sections 241 to 249 making registrations with the names of the MRs of the main office. The first method for registration is a usually used method. In the second MR registration method, the MR of the main office transmits a message of e.g. the healthcare information to the healthcare people, as customers, using the function of proxy distribution, as later explained. The real MR sees the message exchange between the MR of the main office and the healthcare people, as customers, by way of reference for such case that the real MR actually has interview with the healthcare people.

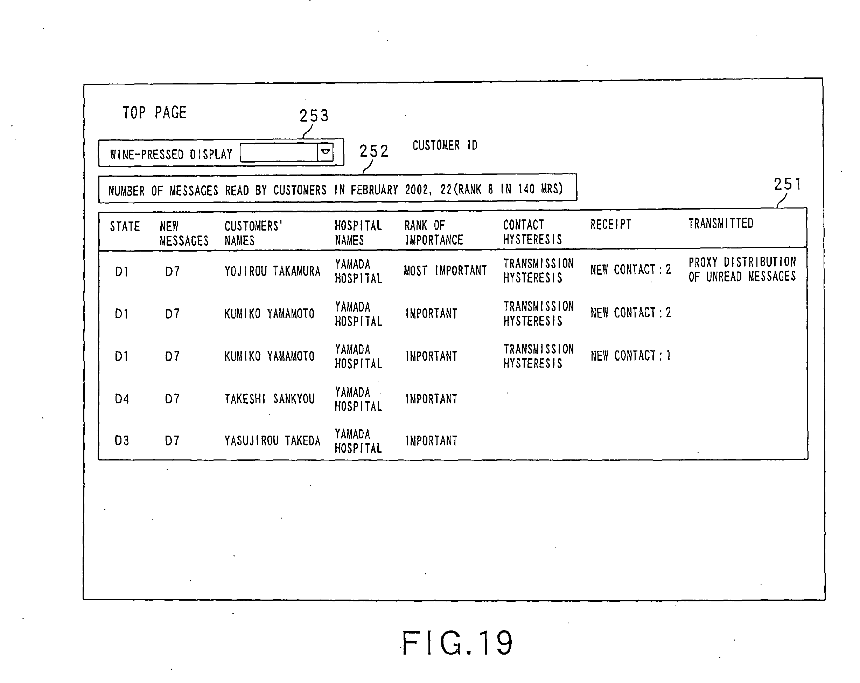

The processing of the MR terminal device 5 accessing the assisting server device 1 to exchange messages with the healthcare people will now be specifically explained. Fig.19 shows a top page displayed on the MR terminal device 5 after the MR terminal device 5 enters a URL of the assisting server device 1 to get to the login picture image and the user ID and the password are entered.

In this top page, there is provided a list display section 251 for displaying a list of the healthcare people associated with the MR in charge. In this list display section 251, the state of the healthcare people, as MR's customers, the names of the customers, hospital facilities, rank if importance, contact hysteresis, and whether the message in charge is a sent message or a message for receipt, are displayed from one customer to another. In a receipt column, the number of new contacts from the customers, if there are any such contacts, are displayed. In a column of transmission, the number of messages unread by the customers is displayed. If the MR of the main office is doing proxy distribution to take the place of the MR in charge, as later explained, the number of the messages by the proxy distribution is displayed. The MR in charge, correlated with the healthcare people, as customers, may be apprised that the proxy distribution has been carried out by the MR of the main office.

In the top page, there are provided a ranking display unit 252 for displaying the ranking of the number of messages read by the customers in the pharmaceutical manufacturing company, and a wine-pressing condition for wine-pressing the customers demonstrated on the list display section 251.

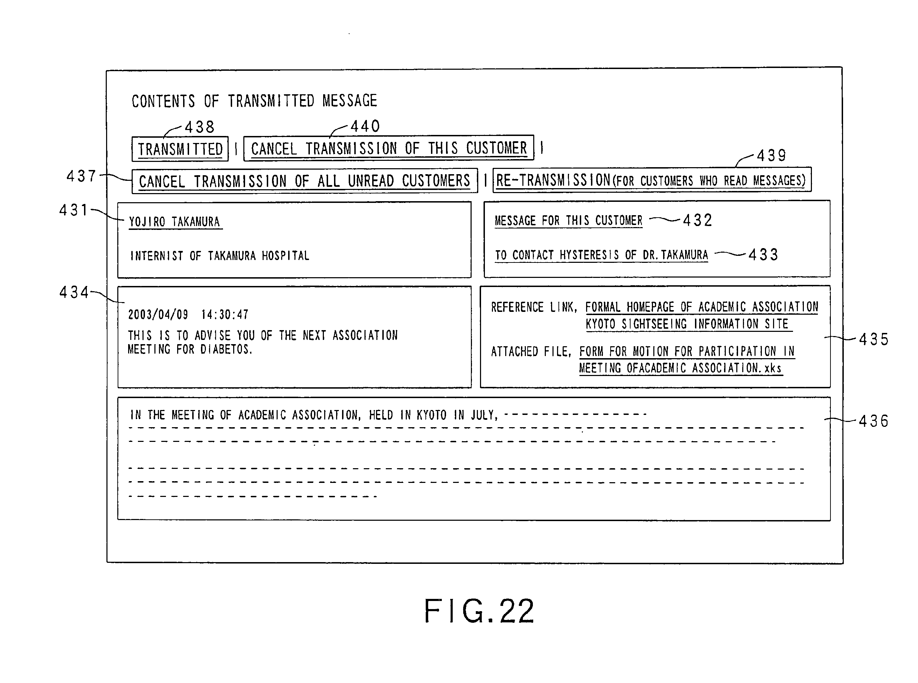

If, in this top page, the 'proxy distribution' in the list display section 251 is clicked, a content display page, for viewing details of the message sent by proxy distribution by the MR of the main office, is displayed. This page is not illustrated in detail because it is similar in configuration to the detailed page of the sent message for the MR of the main office of Fig.22 which will be explained subsequently. The MR in charge may view the details of the message sent by proxy distribution by the MR of the main office to use it as reference material to be used by the MR in charge in subsequent dealing with the customers.

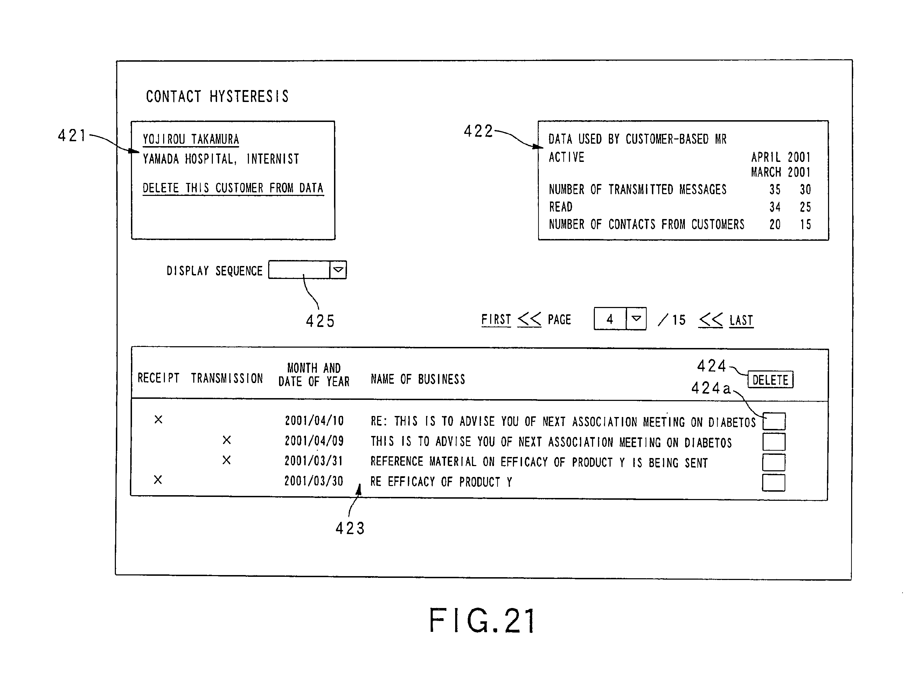

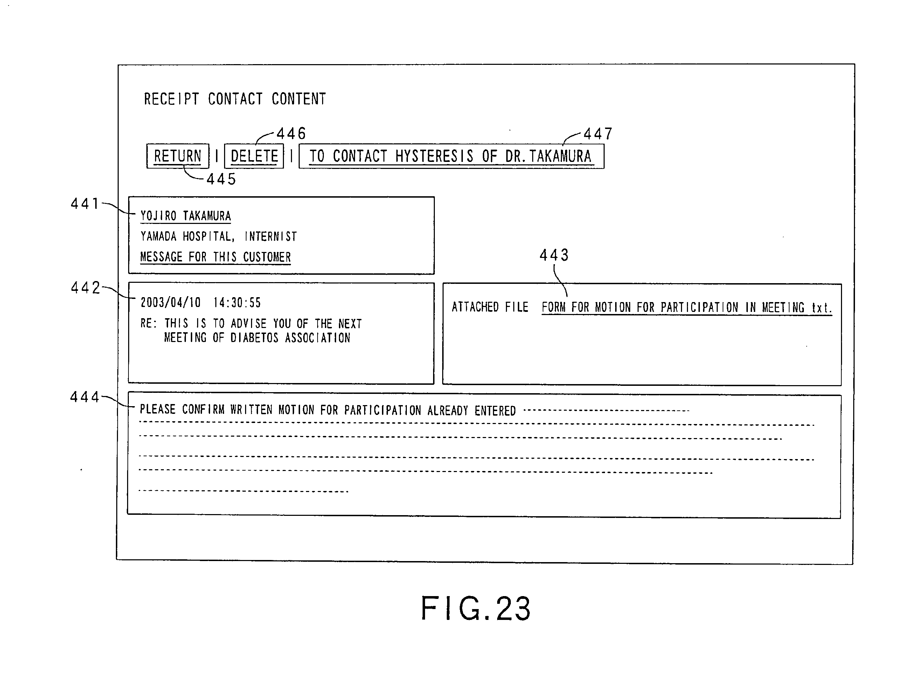

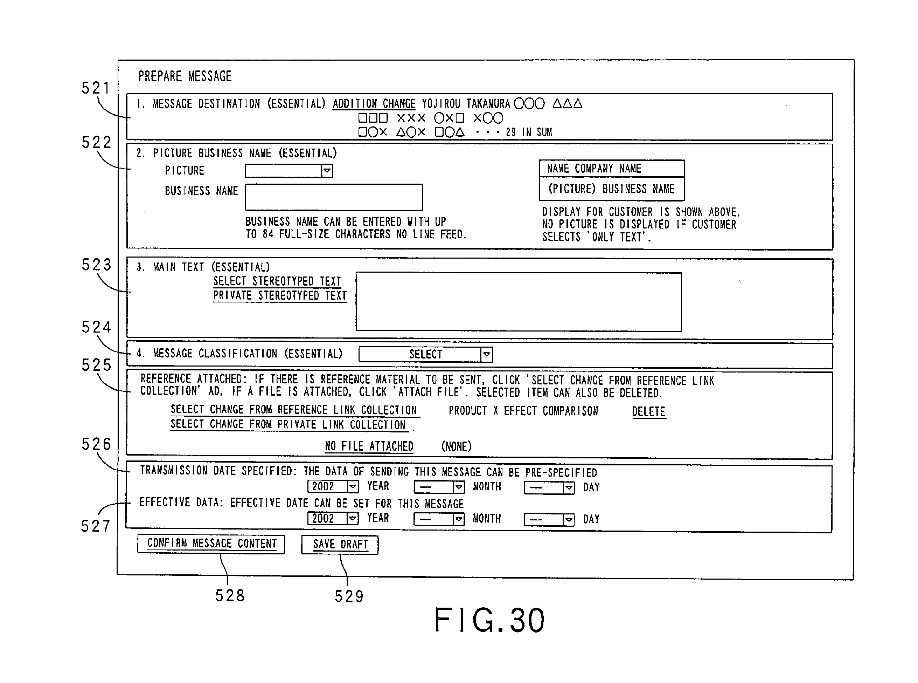

Moreover, if the 'contact hysteresis' in the list display section 251 is clicked, there is demonstrated a detailed page of the contact hysteresis showing a list of sent and received messages of the communication with the healthcare individual as a customer. This detailed page of the contact hysteresis is similar in configuration to the detailed page of the contact hysteresis of Fig.21, which will be explained subsequently. In sum, an MR in charge may view, on clicking the title of the message shown as a list, the details of the received message, and may formulate a message for the healthcare individual (see Fig.30) and return it thereto from a receipt contact content page (see Fig.23) which may be used to view details of received messages.

Meanwhile, the company terminal device 6 (Fig.1), supervised by e.g. the pharmaceutical manufacturing company, the MR belongs to, may send messages to the healthcare people, as customers, in the name of the MR in charge, the company or the MR of the main office, by proxy distribution, in place of the MR in charge, belonging to the company. This might be efficacious when it becomes necessary to assist business activities of MRs, poor in grads, by furnishing the healthcare information with the healthcare information, or when the information such as notification of new pharmaceuticals is desired to be sent unanimously from the pharmaceutical manufacturing company to the healthcare people, as customers.

On the other hand, the administrator of the present system owns the administrator terminal device 7, as shown in Fig.1, and the totality of the healthcare people registered in the present system (circle D) have become customers. Hence, if the administrator of the present system launches a campaign of some form or other for the healthcare people, or if a request for proxy distribution has been made from the pharmaceutical manufacturing company taking part in the present system, messages may be sent, using the administrator terminal device 7, to the healthcare people, as customers, whose working district or field of specialization has met the object of the campaign. When the administrator of the present system has made proxy advertisement of new pharmaceuticals of the preset pharmaceutical manufacturing company, for the totality of doctors, and the healthcare people, on receipt of the messages, have registered the MRs of the main office of the company, the healthcare individuals, who made MR registrations, may become the customers, without the MRs in charge, belonging to the pharmaceutical manufacturing company, having to call on the healthcare individuals. That is, the pharmaceutical manufacturing company, registered in the present system, may increase the number of customers, by requesting the administrator of the present system to make proxy advertisements, without having to dispatch the MR in charge to the premises of the healthcare individuals.

To this end, the assisting server device 1 discriminates the company terminal device 6 and the administrator terminal device 7, actually having the same rights on the network 3, from each other, by e.g. the user's name and the password, and implements the above function with the aid of the same function, as will now be explained.

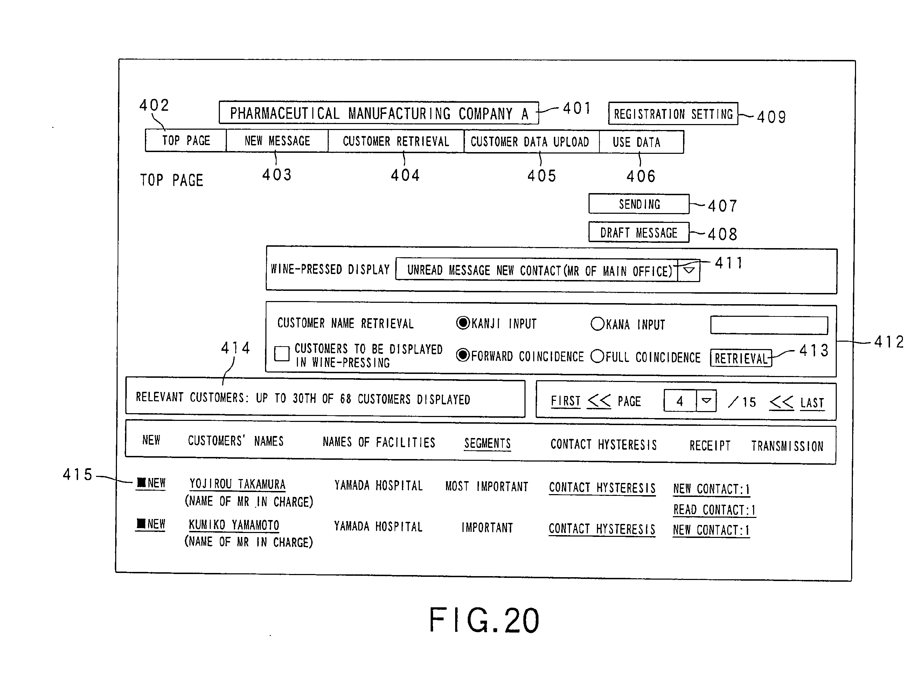

Fig.20 shows a top page displayed on a monitor of the administrator terminal device 7 when the company terminal device 6 or the administrator terminal device 7 has entered a preset user ID and the password to access the assisting server device 1. Referring to Fig.20, there is displayed, in an upper column of this top page, an accessing side display section 401, indicating the person who has made access using the company terminal device 6 or the administrator terminal device 7. In this accessing side display section 401, there are displayed the name of the company of the accessing side and the name of the person in charge. For example, if access has been made from the administrator terminal device 7, there are displayed the company name of the administrator of the present system and the name of the person in charge, whereas, if access has been made from the company terminal device 6, there are displayed the name of the pharmaceutical manufacturing company of the accessing side and the name of the person in charge. In a column below the accessing side display section 401, there are provided tags 402 to 406. The tag 402 is for demonstrating the top page, the tag 403 is for demonstrating a message used for preparing a message, the tag 404 is for demonstrating a page for preparing a message, the tag 405 is for demonstrating a page for uploading customer data and the tag 406 is for demonstrating a page of use data. In a column below the tags 402 to 406, there is provided a transmitting state display section 407, demonstrating the message transmitting state. In this transmitting state display section 407, a display 'sending' is made during the time of transmitting the message, no display is made except during transmission and an alarm message is displayed on occurrence of a transmission error. In a column below the transmitting state display section 407, there is provided a draft message button 408 indicating whether or not a draft message prior to transmission to the healthcare people has been saved. If the draft message(s) have been saved, the number draft message(s) saved is displayed on this draft message button 408. In a column above the tag 406, there is provided a registration setting button 409 for demonstrating a page for registration setting of the MR of the main office who has accessed the page in question.

Meanwhile, the top page, shown in Fig.20, is a page indicated by way of default on the monitor of the company terminal device 6 or the administrator terminal device 7 when the device 6 or 7has accessed the assisting server device 1 with the preset user ID and the password. In this top page, there is displayed a list of records of past transmission and reception with the healthcare people.

Thus, in the top page, there are provided a first retrieving condition inputting section 411 and a second retrieving condition inputting section 412, for inputting retrieving conditions for making list display of records of past transmission and reception with the healthcare people. The first retrieving condition inputting section 411 is for inputting retrieving conditions which are based not on the name of human beings but on the records of transmission and reception. Specifically, selection may be made by a pulldown menu from four conditions, namely unread new contact of messages sent by the MR of the main office operating the company terminal device 6 or the administrator terminal device 7, unread new contact of messages sent by the MR in charge, operating the MR terminal device 5, messages received by the MR of the main office within a preset time, such as within ten days, and messages received by the MR in charge, operating the MR terminal device 5 within a preset time, such as within ten days. Meanwhile, the 'unread new contact of messages sent by the MR of the main office' is a default for ease in use. The reason is that the access by the MR of the main office, operating the company terminal device 6 or the administrator terminal device 7, occurs most frequently, and also that the information as to whether or not the customer has read the message sent by the transmitting side is the information of the utmost concern for the transmitting side.

The second retrieving condition inputting section 412 is retrieval of the customers' names and operates only when the check box for customers to be displayed after wine-pressing has been checked. The customers' names are entered by kanji or kana by conditional inputting and the condition may be retrieved by forward coincidence retrieval or by full coincidence retrieval. The first retrieving condition, entered in the first retrieving condition inputting section 411, and the second retrieving condition, entered in the second retrieving condition inputting section 412, are related to each other by 'AND', such that the names of the customers, which have met the first and second retrieving conditions, are displayed as a list in the top page. The reason there lacks rear coincidence retrieval is that a human being is usually remembered by a by-name. The first and second retrieving conditions may be related with each other by 'OR' instead of by 'AND'. In the vicinity of the second retrieving condition inputting section 412, there is provided a retrieval button 413 for transmitting the first and second input retrieving conditions to the assisting server device 1 to execute the retrieval. Meanwhile, Fig.20 shows an instance of the retrieved results in case the retrieving condition is the 'unread new contact of messages sent by the MR of the main office', as the first retrieving condition.

In a column below the second retrieving condition inputting section 412, there is provided a number-of-businesses indicating section 414 for quantitatively indicating the results of retrieval, and a detail indicating section 415 for indicating details of the retrieved results. In the detail indicating section 415, there are provided a column indicating if the message is new, a column for customer's name (name of the healthcare individual), a column for the names of facilities, a column for segments, a column for contact hysteresis, a column for received messages and a column for sent messages. In the column indicating if the message is new, an indication 'new' is made if a new message has been sent to the healthcare individual as a customer. In the customer's name, the name of the healthcare individual is displayed. If there is already a preset MR in charge, the name of the MR in charge is entered below the customer's name. In the names of the facilities, the name of the hospital, the healthcare individual, as customer, works in or belongs to. In the column of the contact hysteresis, 'contact hysteresis' is displayed when there was message exchange in the past with the healthcare individual. If there is a return message in the receive column from the healthcare individual, the message was transmitted to, 'new contact' is displayed, whereas, if there is a notification from the healthcare individual that the message transmitted from the MR of the main office was read by the healthcare individual, 'recording contact' is displayed.

As described above, the reaction to the message sent to the healthcare individual as a customer may be confirmed in a list. If the name of the MR in charge is stated below the customer's name in the detail indicating section 415, the name of the MR in charge may be clicked to display the message formulating page of Fig.30 as later explained. The MR of the main office may send a return message to the customer by proxy distribution for the MR in charge. If the customer's name is clicked, the MR of the main office may directly send a return message to the customer without the interposition of the MR in charge.

In case the 'contact hysteresis' displayed in the contact hysteresis of the detail indicating section 415, showing details of the retrieved results of the top page, the detailed page of the contact hysteresis is displayed, as shown in Fig.21. Meanwhile, Fig.21 shows a picture image when the contact hysteresis of a doctor 'Yojiro Takamura' in the detail indicating section 415 of the top page shown in Fig.20 is clicked.

Referring to Fig.21, there is provided a customer indicating section 421 for indicating the information pertinent to the customer of interest. In the customer indicating section 421, there are indicated the name of the facilities or the field of specialization, for example, in addition to the customer's name. If there has been no reaction for a preset time, such as six months, to the message from the customer, the assisting server device 1 deems the state to be a dormant state and demonstrates the effect that this customer may be deleted from the customers' list in the customer indicating section 421. In the contact hysteresis page, there is provided a use state indicating section 422 for comprehending the use state by the customer. In this use state indicating section 422, there are indicated the number of messages sent to the healthcare individual of interest this month and last month, the number of messages read out of the messages transmitted and the number of contacts from the customer.

In the contact hysteresis page, there is provided a hysteresis list indicating section 423 for demonstrating a list of contact hysteresis with the healthcare people. In this hysteresis list indicating section 423, there are provided a column for discrimination for discriminating if the message of interest is a sent message or a received message, day and month of the year when the message was transmitted or received, a column of the businesses of the messages transmitted or received, and a deletion check box 424a provided from message to message. When a check mark is entered in the deletion check box and a delete button 424 is clicked, the message is deleted.

In the contact hysteresis page, there is also provided a condition inputting section 425 for determining the display sequence of the hysteresis list indicating section 423. The condition inputting section 425 is a pulldown menu and selection may be made of the display sequence condition, such as receiving sequence (the sequence of receipt unread, receipt read and transmitted), transmitting sequence (the sequence of transmitted but unread, transmitted and read and received) or chronological sequence (i.e. from old to new).

Fig.22 depicts a content display page for viewing details of the sent messages displayed on clicking the names of business of the sent messages of the hysteresis list indicating section 423 of the contact hysteresis page shown in Fig.21. Specifically, Fig.22 shows a picture image displayed on clicking 'advice on impending association meeting for diabetes' in the second row from above of the hysteresis list indicating section 423 shown in Fig.21.

Referring to Fig.22, there is provided a customer indicating section 431 for displaying the information pertinent to the healthcare people, as a customer and as a destination of transmission of the message of interest. In this customer indicating section 431, the name of the facilities, such as the name of the hospital, and the fields of specialization, are displayed, in addition to the customer's name. In the vicinity of the customer indicating section 431, there are provided a first link section 432 stating 'message to this customer' and a second link section 432 stating 'to contact hysteresis'. The first link section 432 is linked to a message formulating page, while the second link section 432 is linked to a contact hysteresis page shown in Fig.21.

In a subjacent zone to the customer indicating section 431, there is provided a basic information indicating section 434 indicating the basic information of the message of interest. In this basic information indicating section 434, there are indicated the date and time of transmission and the name of the business, as the basic information. In the detail page, there is also provided a relevant information displaying section 435, in which the URL of the homepage and the name of the attached file are displayed as the information relevant to the message. In addition, there is provided, in the detail page, a message indicating section 436 stating the main text of the message in question.

There are occasions wherein a transmitting side desires to cancel the message transmitted, even after transmitting the message to the healthcare people as customers. Hence, there are provided in the detail page a transmission canceling button 440 for a customer, only for a case the healthcare individual as the destination of transmission has not read the massage, and a transmission cancel button 447 for the totality of customers who have not read the message. The reason the message is to be canceled only when the healthcare individual as the destination of transmission has not read the message in question is that it would be of no avail to cancel the message once read by the healthcare individual as the destination of transmission. There are also provided a transfer button 438 for transferring a message to the healthcare individual as another customer and a re-transmitting button 439 for re-transmitting the message to the healthcare people.

Fig.23 shows a receipt contact content page displayed when the name of business of the received message in the hysteresis list indicating section 423 of the contact hysteresis page shown in Fig.21 is clicked. Specifically, the page is a picture image when the uppermost 'Re: This is to advise you of the impending association meeting on diabetes' in the hysteresis list indicating section 423 of Fig.21 is clicked.

Referring to Fig.23, there is provided in the receipt contact content page a customer indicating section 441 for demonstrating the information pertinent to the healthcare individual as the customer who is the source of transmission of the message in question. In this customer indicating section 441, there is provided, in addition to a customer's name, the name of the facilities, such as hospital name, and the field of specialization. In a subjacent area to the customer indicating section 441, there is provided a basic information indicating section 442 where the basic information of the message in question is displayed. In the basic information indicating section 442, the date and time of receipt and the name of business, as the basic information of the message, are displayed. In the receipt contact content page, there is provided a relevant information indicating section 443. In this relevant information indicating section 443, there are indicated a URL of e.g. a homepage and the name of an attached file, as the information relevant to the instant message. In the receipt contact content page, there is further provided a message indicating section 444 stating the main text of the instant message.

In the receipt contact content page, there are also provided a return button 445 for responding to the received message, a delete button 446 for deleting the received message and a link section 447 for returning to the contact hysteresis page of Fig.21. Meanwhile, there may be displayed, in the vicinity of the link section 447, the number of new contacts from this customer for allowing recognition of the presence of other messages pertinent to the present customer.

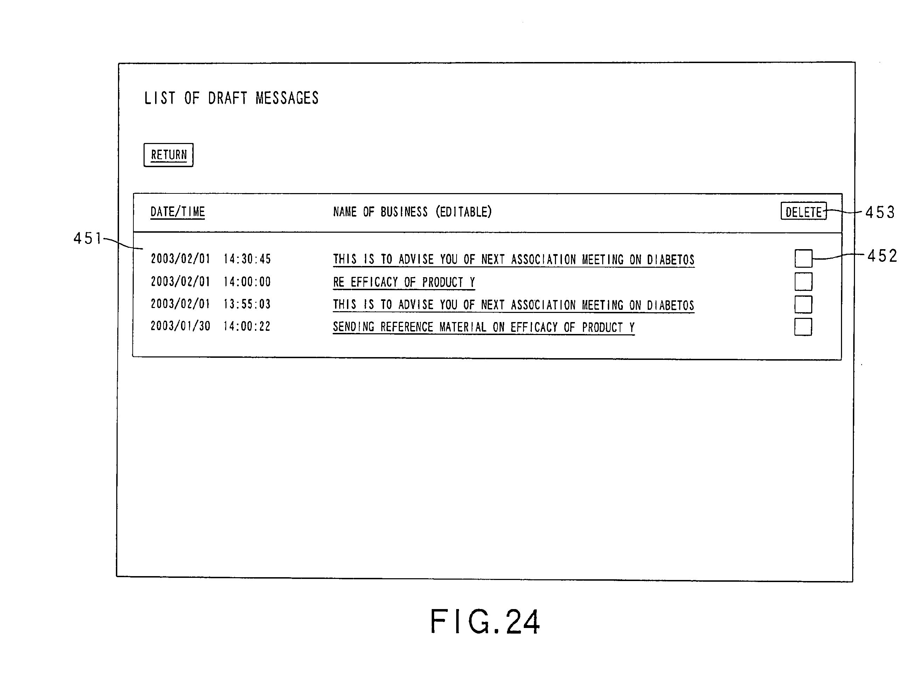

When the draft message button 408 of the top page shown in Fig.20 is clicked, a draft message list page is displayed, as shown in Fig.24. The draft message list page is provided with a list display section 451 of the draft messages. In this list display section 451, a list of messages yet to be transmitted is demonstrated, and the date and time as well as the name of the business is displayed from one message to the next. It is noted that the date and time displayed in this list display section 451 is not only the date but also the time the message has been saved by the operator to prevent disorder from occurring in case the operator has prepared messages a number of times in a day. When the name of business is clicked, the detailed page of the message of the name of business in question is displayed.

In the list display section 451, a check box 452 is provided for one message to another, and a delete button 453 is provided. If, after checking the check box 452, the delete button 453 is clicked, the message yet to be transmitted, checked in the associated check box 452, is deleted.

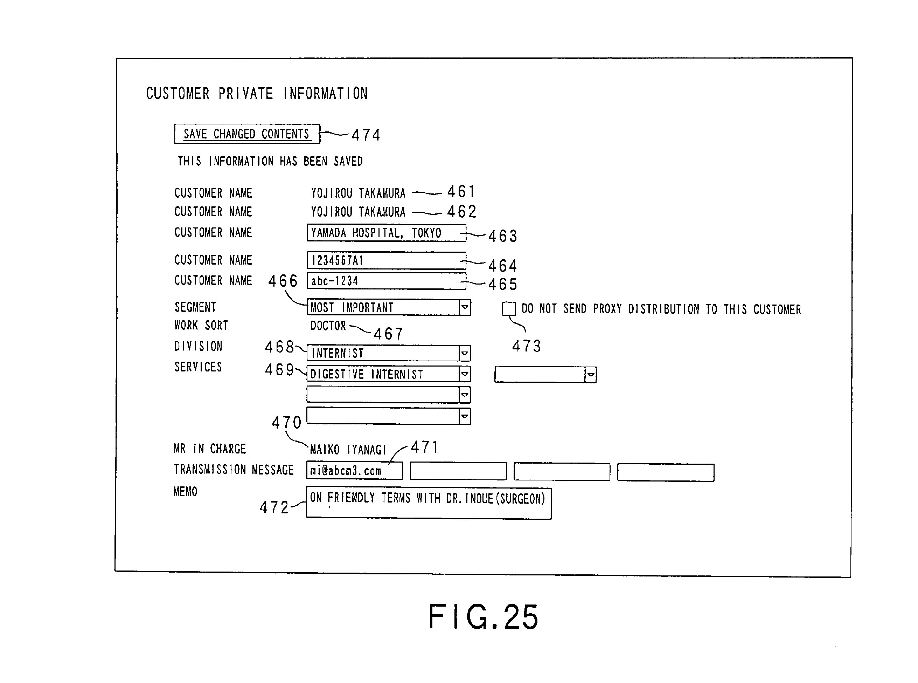

When the customer's name in the customer indicating section 421 of the contact hysteresis page, the customer's name in the customer indicating section 431 of the content page of the sent message of Fig.22 or the customer's name in the customer indicating section 441 of the receipt contact content page of Fig.23 is clicked, a customer's private information page, stating the private information of the customer, is displayed, as shown in Fig.25. It is noted that Fig.25 depicts a customer's private information page for 'Yojirou Takamura' displayed on clicking 'Yojirou Takamura' as a customer. This customer's private information page is provided with a first customer's name indicating section 461 for displaying the customer's name in kanji, a second customer's name indicating section 462 for displaying kana annexed to the name in the section 461, a name-of-facilities display section 463, displaying the name of the facilities, the customer belongs to, a user ID indicating section 464, indicating the identification data of the customer of interest, a facilities ID indicating section 465 for displaying the identification data of the name of the facilities, a segment indicating section 466 for indicating the rank of importance of the customer of interest, a work type indicating section 467 for indicating the customer's work type, a division indicating section 468 for displaying the division, the customer belongs to, plural specialization indicating sections 469 for displaying the customer's services, an MR indicating section 470, displaying the MR in charge of the doctor of interest, an address inputting section 471 for entering the address of the destination of message transmission, and a memo inputting section 472 for inputting a memo.

When the MR of the main office is in charge, the name of the MR of the main office is displayed in the MR indicating section 470. When the MR in charge is determined, the MR in charge is demonstrated. An E-mail address, as a liaison site of the mobile information terminal, owned by the MR in charge, is input to the address inputting section 471 for advising the MR in charge of the fact that proxy message distribution has been carried out for the customer.

The customer's private information page is also provided with a check box 473 for discriminating whether or not the customer for whom proxy distribution is allowed. The check box 473 inhibits or allows the proxy distribution for the customer if checked or if otherwise, respectively. The customer's private information page is also provided with a change content button 474 for changing the customer's private information. The change content button 474, if checked, allows updating the customer's private information.

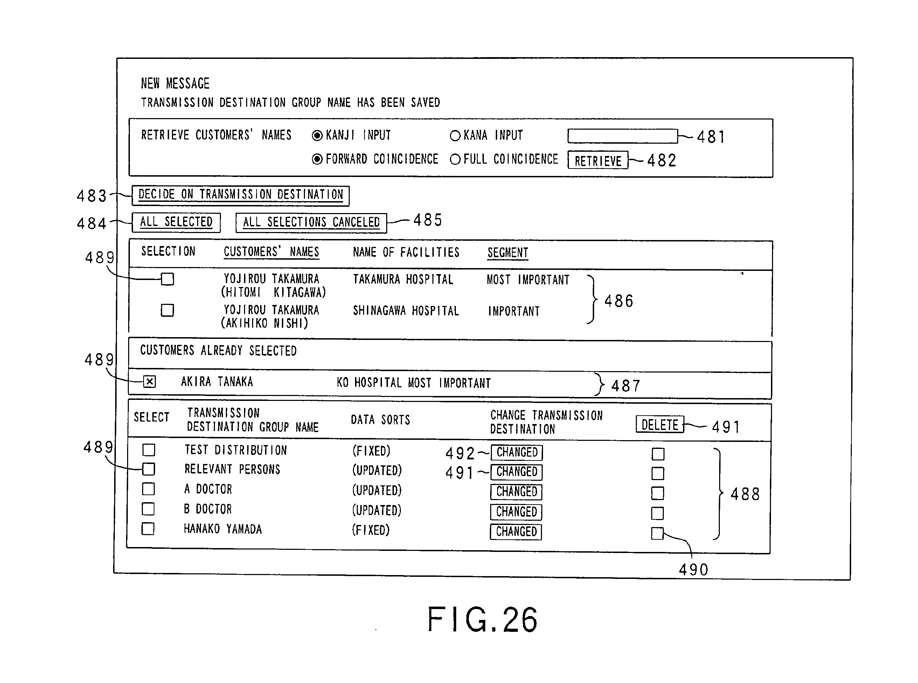

The MR of the main office of the pharmaceutical manufacturing company or the administrator of the present system, desiring to proceed to proxy distribution for the healthcare people, as customers, using the company terminal device 6 or the administrator terminal device 7, respectively, clicks the tag 403 for formulating a new message of the top page, shown in Fig.20, to access the new message page shown in Fig.26. This new message page is provided with a retrieval condition inputting section 481 for retrieving the healthcare people, as customers, the message is transmitted to. The retrieval carried out in the retrieval condition inputting section 481 is a customer name retrieval. In the retrieval condition inputting section 481, the customer's name is entered with kana or kanji, by conditional inputting. This condition may further be retrieved by forward or full coincident retrieval. In the vicinity of the retrieval condition inputting section 481, there is provided a retrieve button 482 for transmitting the entered retrieval condition to the assisting server device 1 to carry out the retrieval. In the vicinity of the retrieve button 482, there are provided a transmission destination decision button 483 and a full selection button 484 in the vicinity of the transmission destination decision button 483 for full selection of the customers extracted e.g. by retrieval, and a full selection cancel button 485 for canceling the selection of the selected customers.

In the new message page, the retrieved results and so forth are displayed in a list in a column below an operating section provided with a retrieval condition inputting unit 481, a retrieval button 482, a full selection button 484 and a full selection cancel button 485. Specifically, there are provided a first list display section 486 for demonstrating the healthcare people, registered on the individual level, a second list display section 487, for demonstrating the selected healthcare people, and a third list display section 488 for demonstrating a list of groups each composed of plural healthcare individuals. In the list display sections 486 to 488, there are displayed the customers' names, names of the facilities, segments representing the rank of importance, check boxes 489 for determining selection/ non-selection, check boxes 490 for deletion from the extracted customers' list and delete buttons 491 for deleting the customers checked in the check boxes. For the names of the customers of the first list display section 486, in which there are demonstrated the healthcare people, registered on the individual level, the names of the MRs in charge are entered side-by-side, if these MRs in charge arealready determined.

In the third list display section 489, the names of the groups registered are demonstrated in a list. These groups are groups of customers extracted by the administrator of the company terminal device 6 or the terminal device 7. When the proxy distribution is done repeatedly, the necessity of selecting the destination of transmission each time is eliminated to improve the operability. As for the groups displayed in the third list display section 488, demonstrating the names of the registered groups in a list, the component members may be fixed or incidentally updated. If, in the third list display section 488, the component members of a given group are fixed, the indication of 'fixed' is used as the sort of the group displayed in a list, made, whereas, if the component members are of a given group is incidentally updated with increase in the number of the company-level customers, the indication of 'updated' is used.

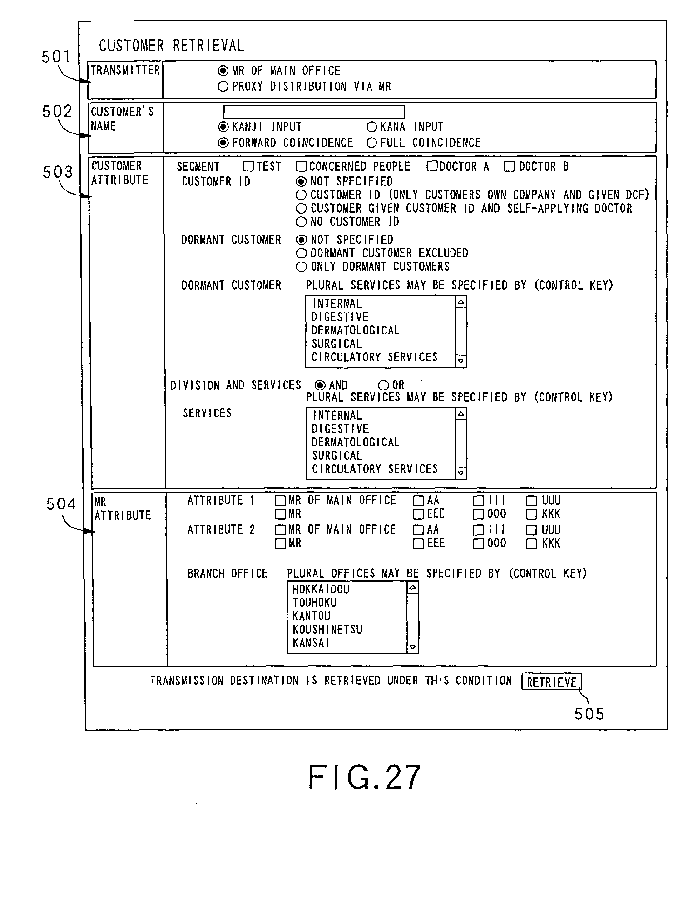

If the group 'updated' displayed in the third list display section 488 is changed, a change button 491 is clicked. If the change button 491 is clicked, the customer retrieval page, shown in Fig.27, is accessed. If the tag 404 for retrieving the customers of the top page, shown in Fig.20, is clicked, the customer retrieval page, shown in Fig.27, is accessed. This customer retrieval page is provided with a transmitting side selecting section 501 for selecting a message transmitting side, a customer name condition inputting section 502 for inputting the retrieving condition in retrieving the message transmitting side by the customer's name, a customer attribute condition inputting section 503 for inputting the customer's attributes as a retrieving condition, and an MR attribute condition inputting section 504 for inputting the attributes of the MR in charge of the customer as a retrieving condition.

The transmitting side selecting section 501 is for deciding on the message transmitting side. If the 'MR of the main office' is selected, the MR of the main office directly transmits a message, without regard to the MR in charge. If the 'proxy distribution by MR' is selected, the message is transmitted so that the MR in charge will also be able to view the sent message. That is, if the 'proxy distribution by MR' is selected, the message prepared by the MR of the main office, instead of by the MR in charge, associated with the healthcare individual as the destination of message transmission, is transmitted to the healthcare individual. If the registered contents of the MR in charge are the contents of the MR in charge (the aforementioned first MR registration method), the message prepared by the MR of the main office is transmitted in the name of the MR in charge. On the other hand, if the registered contents of the MR in charge are the contents of the MR of the main office (the aforementioned second MR registration method), the message prepared by the MR of the main office is transmitted in the name of the MR of the main office.

If the 'proxy distribution via MR' is selected, the assisting server device 1 demonstrates 'proxy distribution' in the list display section 251 of the top page (Fig.19) of the MR associated with the healthcare individual as the destination of the message transmission.

The customer name condition inputting section 502 is a condition inputting column in retrieving the healthcare people, as customers, with the name. Specifically, the customer's name may be entered by condition inputting with kanji or kana. The condition may be retrieved by forward or full coincidence retrieval.

The customer name condition inputting section 502 has, as items of retrieval, a segment, a customer ID, a division and services. The segment is an attribute of a customer as set by an operator of the company terminal device 6 or the administrator terminal device 7. One or more segments may be selected from plural such segments. The customer ID is not specified by default, In addition, there are 'only for customers afforded with customer IDs', 'customer afforded with customer ID and doctors who made motions on their own' and 'no customer ID'. The division selects the specializations of the healthcare people. One or more of divisions, such as 'internists', 'digestive internists' and 'dermatologists' may be selected. The selecting conditions may be selected by 'AND' or 'OR'.

The MR attribute condition inputting section 504 may select one or more of attributes, such as an MR of the main office or an MR of a branch office, as set in advance by the company. The territory or the branch office of the MR in charge may also be selected.

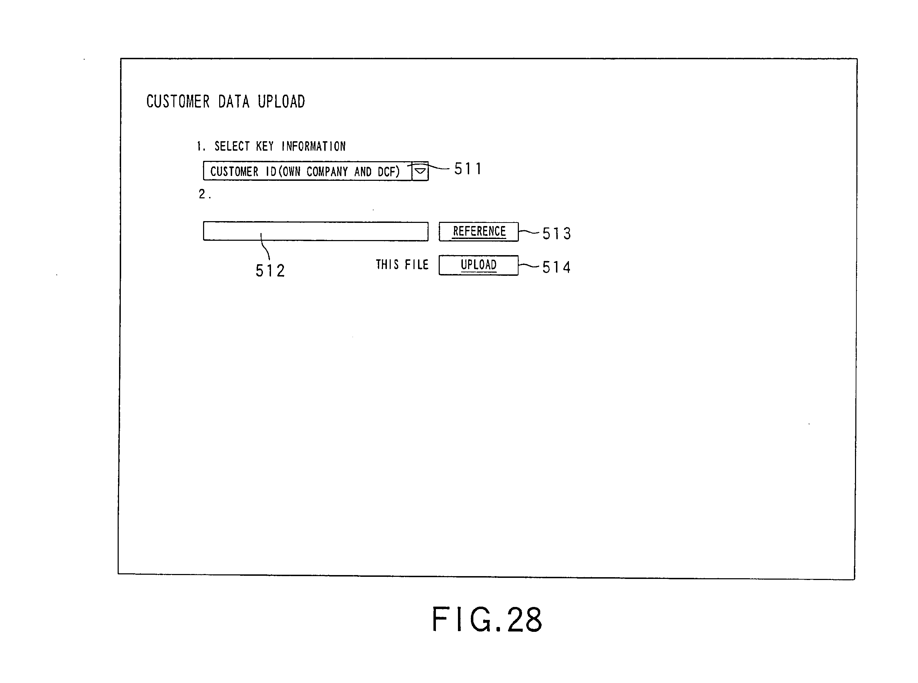

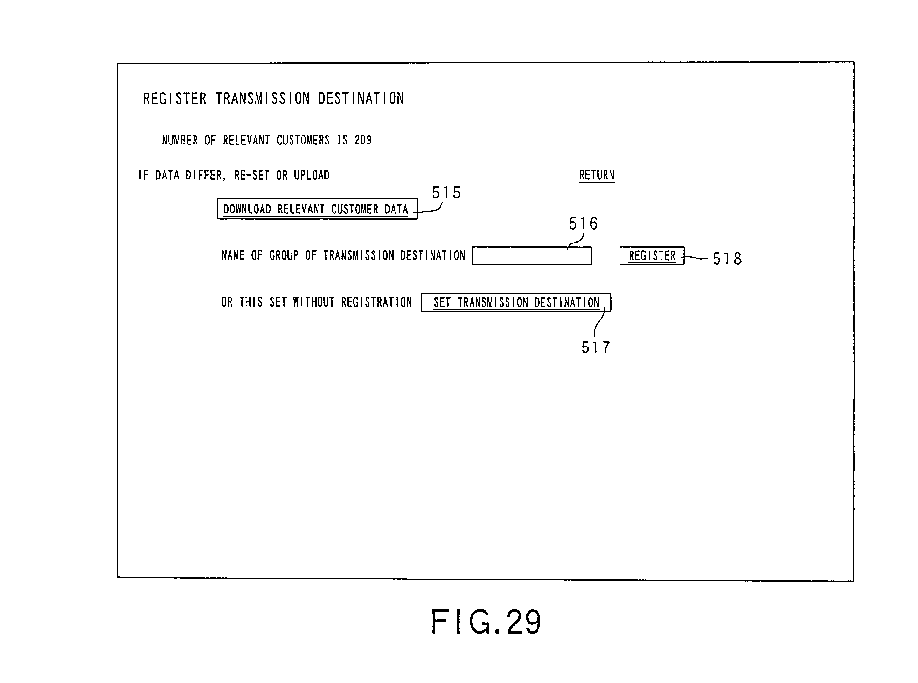

In the customer retrieval page, there is provided a retrieval button 505 for doing retrieval under the condition entered to the customer name condition inputting section 502, customer attribute condition inputting section 503 and to the MR attribute condition inputting section 504. When the retrieval button 505 is clicked, processing transfers to a transmission destination registration page of Fig.29. The group registered in this page is displayed as attribute (update) in the third list display section 488 of the new message page shown in Fig.28. Although only the group name is demonstrated in this third list display section 488, the healthcare people, extracted in the retrieval processing of the previous stage, are associated with this group. Among the updated groups, demonstrated in the third list display section 488, the customer group retrieved under the preset conditions in the customer retrieval page becomes one group.

For changing the 'fixed' group displayed in the third list display section 488 of the new message group of Fig.26, a change button 492 is clicked. If the change button 492 has been clicked, access is made to a customer data upload page shown in Fig.28. In this customer data upload page, there are provided a key information inputting section 511, to which the key information is entered, a file inputting section 512, to which a filename uploaded is entered, a reference button 513 for selecting the filename of the file inputting section 512, and an execute button 514 for uploading the selected file.

To the key information inputting section 511, the customer ID or the system doctor code is entered. To the file inputting section 512, the filename uploaded is entered. The uploadable files are those files of the CSV (Comma Separated Value) type files in which respective fields in a record are enumerated with commas (,) as delimiters. The reference button 513 may have reference to the administrator terminal device 7 or to addresses thereof to specify a file saved in the hard disc of the company terminal device 6 or the administrator terminal device 7. When the key information is entered to the key information inputting section 511, a file has been specified for the file inputting section 512, and the execute button 514 is subsequently clicked, the company terminal device 6 or the administrator terminal device 7 upload the file to the assisting server device 1 over the network.

Fig.29 shows a transmission destination registration page when the retrieval button 505 is clicked in the customer retrieval page of Fig.27 or when the upload button 514 of the customer data upload page 514 of Fig.28 is clicked. This page is for group registration. The assisting server device 1 accesses the database 2 and extracts customers coincident with the transmitted file to transmit the number of the coincident persons to the company terminal device 6 or to the administrator terminal device 7. There is provided a download button 515 for re-setting. There are also provided a name inputting section 516 for inputting a group name to be afforded to a customer group in which the uploaded file is coincident with the database 2 of the assisting server device 1, and a registration button 518 for registering the input group name. There is also provided a decision button 517 for setting the customer group in which the uploaded file is coincident with the database 2 of the assisting server device 1 as a destination of transmission of the proxy message distribution. When the decision button 517 is clicked, the data attribute is displayed as 'fixed' or 'update' in the third list display section 488 of the new message page shown in Fig.20. Although only the group name is displayed in the third list display section 488, the healthcare people registered in the database 2 of the assisting server device 1 are associated with this group.

By the above retrieval, the healthcare people, extracted by retrieval in the first to third list display sections 486 to 488 of the new message page shown in Fig.26, are displayed in a list. When the operator clicks the check box 489 to decide on the destination of transmission, and also clicks a transmission destination decision button 483, a message forming page for forming a message of proxy distribution is demonstrated.

Referring to Fig.30, the message forming page is provided with a transmission destination display section 521, demonstrating the destination of message transmission, a picture/ business name inputting section 522 for inputting the name of business of the message and a picture, a message forming section 523, for forming the main text, a classifying section 524 for classifying the messages transmitted, a resource annexing section 525 for attaching resources to the message, a transmission date specifying section 526 for specifying the date of message transmission to the destination and an effective term specifying section 527 for specifying the effective term of message transmission.

The transmission destination display section 521 demonstrates the destination of transmission, as selected by the new message page, shown in Fig.26, and a sum of the number of persons, and is provided with an addition change button 528 for addition and change of the destination of transmission in the stage of message formulation. When the addition change button 528 is clicked, the new message page of Fig.26, which allows the destination to be added or changed, is displayed. The destination of transmission, displayed here, has been selected in the new message page of Fig.26. If the name of the MR in charge is indicated below the customer's name in the detail indicating section 415 of the top page of Fig.20, and the name of the MR in charge is clicked, the message of the MR in charge may be transmitted in place of the MR in charge. When the customer's name in the detail indicating section 415 of the top page of Fig.20 is further clicked, the MR of the main office may directly send a return message to the customer, without the intermediary of the MR in charge.

The picture business name inputting section 522 may not only select picture data attached to the message, but also enter the name of the business as text. If the business is a notification on a campaign, the selected picture is a character picture of the campaign.

The message forming section 523 is able to formulate the main text of the message transmitted to the healthcare people as customers. Here, a stereotype text prepared by a third side or a personal stereotyped text may be read out to assist the message former. In the case of the company terminal device 6, a message such as PR or ad of the company is formed in the message forming section 523. In the case of the administrator terminal device 7, an ad message of the particular pharmaceutical manufacturing company which made the PR and the ad in the campaign conducted by the system administrator for the totality of the customers, for example, is entered. The classifying section 524 is for specifying the message sort and classifies or selects whether the message prepared is an illustrative text or an ad text.

The resource annexing section 525 may select resources annexed to the message. For example, it is possible to select a preset file from a set of resources and to select a preset URL from a set of links to attach the selected data to the message.

The transmission date specifying section 526 decides on the date and time of transmission of the message to the customer and may transmit a message from time to time to the healthcare people as customers. For example, if the message is a notification of a campaign, the message may be sent on e.g. a day directly before the day on which the campaign commences. Specifically, the messages transmitted from the company terminal device 6 or the administrator terminal device 7 are stored in the database 2 and transmitted by the assisting server device 1 on the designated date and time for transmission to the user terminal device 4 of the healthcare individual.

The effective term specifying section 527 may specify the effective term of the sent message to prevent the situation where the customer who failed to unseal the message unseals the message after it has become meaningless. For example, the effective term is set to the last day of the campaign period to prevent the customer from browsing the message after the campaign has come to a close.

If a message the effective term for which is set has not been unsealed within the effective term, cancellation of the message may be accepted, whereas, with a message is read and the effective term has lapsed, cancellation of the message may not be accepted. The reason is that the read message or the message the effective term of which has lapsed has already been read by the addressed healthcare individual or is a meaningless message if transmitted to the addressee, so that there is no sense in canceling it.

The message forming page is provided with a confirm button 528 for confirming the contents of the message formed, after the above setting has been made, and a draft save button 529 for saving the draft of the formed message.

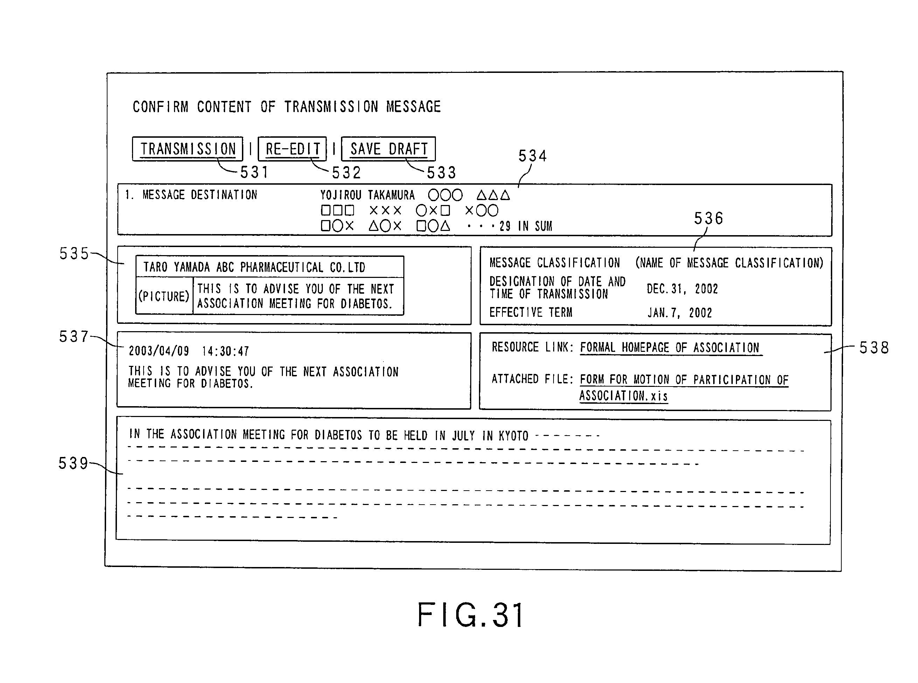

When the confirm button 528 is clicked, the message transmission content confirming page, shown in Fig.31, is displayed. This message transmission content confirming page is provided with a transmitting button 531 for transmitting the confirmed message, a re-edit button 532 for re-editing the message to be transmitted, and a draft save button 533 for saving the draft of the message formed.

This message transmission content confirming page is provided with a transmission destination display section 534 for displaying the destination of message transmission, a picture/ business name display section 535 for displaying the message picture and the name of the business, a transmission setting confirming section 536 for confirming the transmission setting of the sent message, day and month of the year/ name of business display section 537 for displaying the day and month of the year and the name of business of the sent message, and a message display section 539 for confirming the main text of the sent message.

In the transmission destination display section 534, the names of the customers, as set as the destination of message transmission, and the number of selected persons, are displayed. In the picture/ business name display section 535, the company name and the name of the message transmitter as well as the number of persons selected are displayed. In the transmission setting confirming section 536, the class of the message, the date of message transmission specified and the effective term are displayed. In the day and month of the year/ name of business display section 537, the day and month of the year of the message transmitted and the name of business are displayed. In the message display section 539, the main text of the message prepared by the transmitter is displayed. In the message transmission content confirming page, the message is transmitted to the assisting server device 1 over the network 3 by the operator confirming the display contents and clicking the transmit button 531.

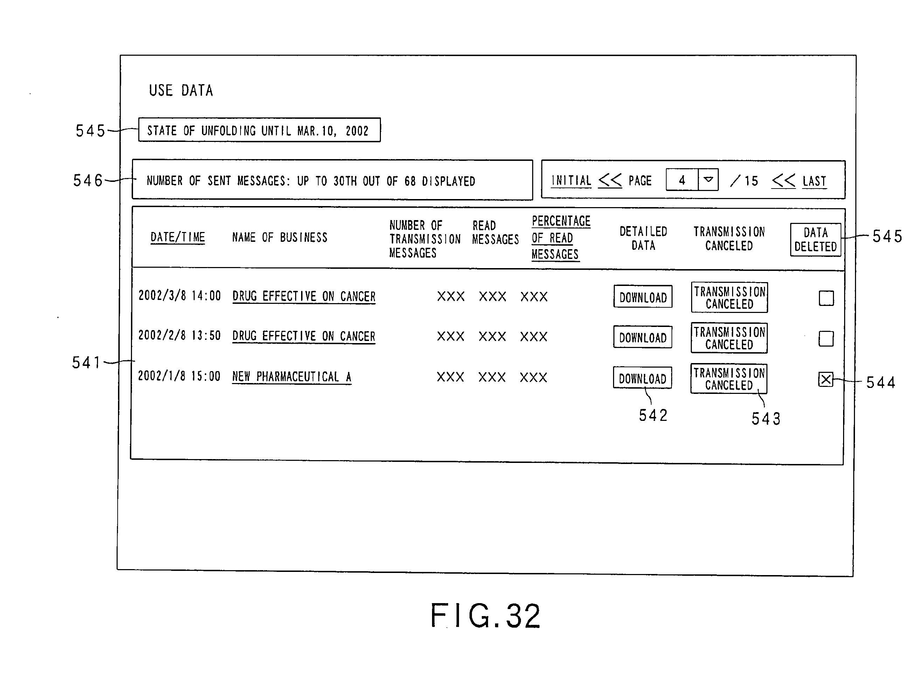

If the tag 406 for confirming the message use data in the top page of Fig.20 is clicked, the use data page, shown in Fig.32, is displayed. This use data page is for checking the proportion of the message unsealed by the customer of the destination of transmission, and displays the state of unsealing until the date of access and the number of sent messages.

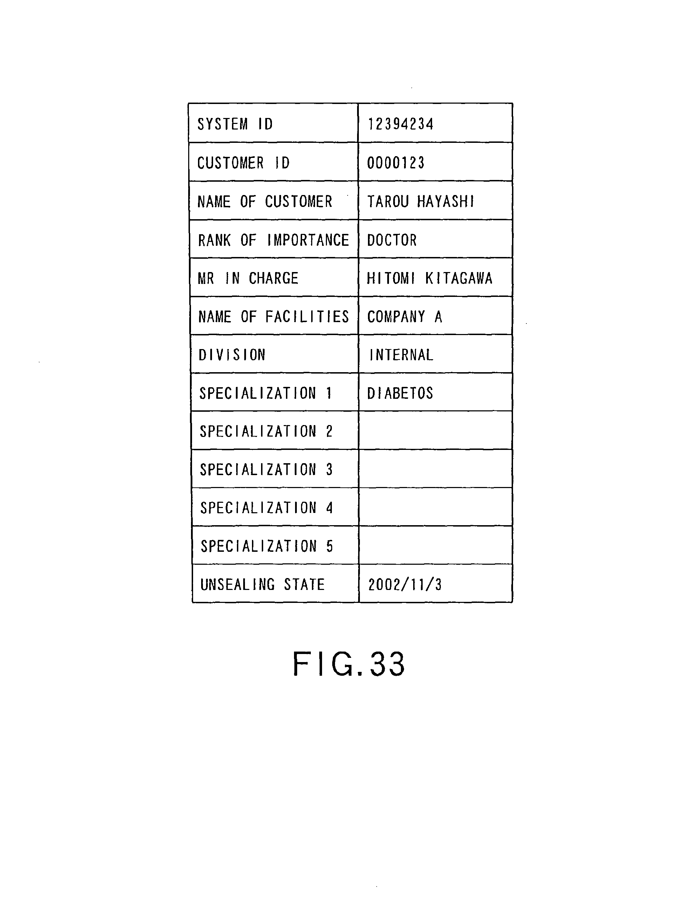

This use data page is provided with an unsealed state display section 545 for demonstrating the message unsealing state and a number-of-businesses display section 546 for displaying a list of sent messages. The use data page is also provided with a list display section 541 for displaying a list of sent messages. In this list display section 541 are displayed the date and time of message transmission, name of business of the message, number of sent messages, number of read messages and the percentage of the read messages to the sent mesages. Each message is provided with a download button 542 for acquiring detail data. If this download button 542 is clicked, it is possible to download a CVC form file having recorded details of the percentage of unsealed messages. Specifically, the use data downloaded states the detailed information of e.g. the unsealing state of the message, as shown in Fig.33, and includes a system ID, a customer ID for identifying the healthcare people, as customers, the customers' names, the rank of importance of the customers, the MR in charge, the name of the MR's facilities, the service and the specialization of the customer, and the unsealing state, such as unsealing date and time of the message. There are also provided transmission cancel buttons 543 for canceling the sent message, check boxes 544 for message selection, and a delete button 545 for deleting the selected message. The operator of the administrator terminal device 7 may check e.g. the percentage of read messages to confirm the efficacy of the sent message.

When the registration setting button 409 of the top page, shown in Fig.20, is clicked, the registration setting button, for registration and setting of the MR of the main office accessing the top page is displayed. In this registration setting page, there is provided a profile display section 561 in which to display the profile of the MR of the main office who accessed the top page. In this profile display section 561, there are displayed the MRID and the name of the MR of the main office, and the company name, as unchangeable information. This information may be changed by the MR addition change page, shown in Fig.18, that may be accessed from the MR management page shown in Fig. 17. In the profile display section 561, the company's telephone number, mobile phone number, E-mail address, domicile and business time, as changeable information, may be input or changed, in order to permit the MR of the main office to carry out smooth business activities.

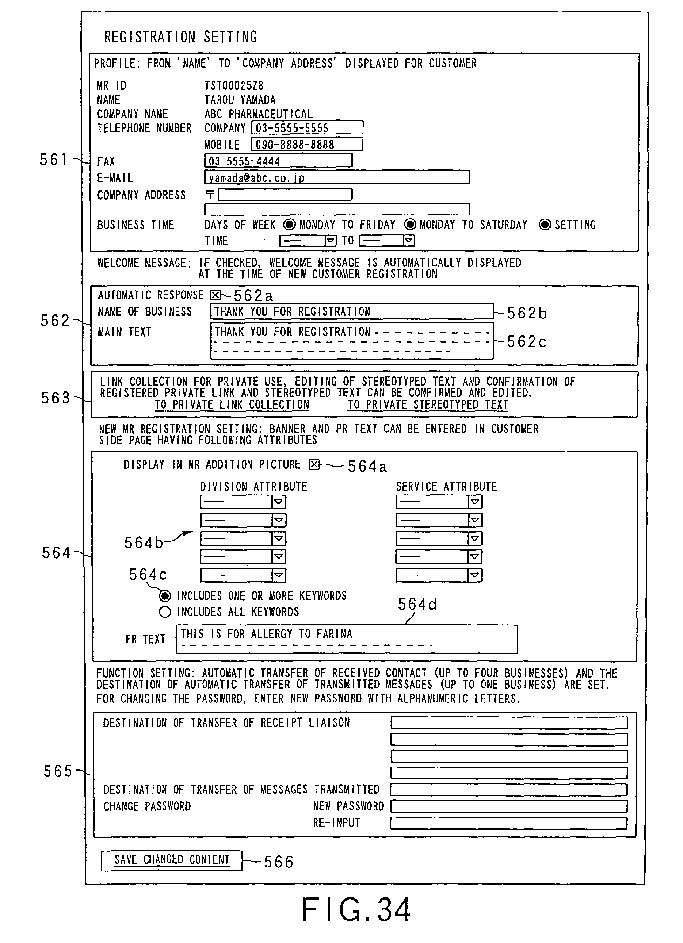

Meanwhile, it is often the case that the healthcare people initially exchange messages with this MR of the main office when entering into dealings with a particular pharmaceutical manufacturing company. Thus, in the registration setting page, shown in Fig.34, there is provided an automatic response setting section 562 for setting for automatic transmission of a message, in token of gratitude, when the healthcare individual made new registration. This automatic response setting section 562 is provided with a check box 562a for checking whether or not automatic response is to be made, a business name inputting section 562b for inputting the name of business of the message, and a main text inputting section 562c for inputting the main text of the message. If, when the check box 562a is checked, a healthcare individual has made new approval, a message set in the automatic response setting section 562 is sent from the MR of the main office to the healthcare individual.

In the registration setting page, shown in Fig.34, there is provided a link information setting section 563 for doing link information setting for the information annexed when the MR of the main office has message exchange with the healthcare people. In this link information setting section 563, a URL, for example, pertinent to the message sent to the healthcare people, can be set.

The MR of the main office is displayed in the box 42 of the unregistered MRs in which there are displayed MRs not approved by the healthcare individual, taking part in the present system, as a customer. This box 42 is provided in the sponsor frame 36 of the WWW browser window, shown in Fig.7, initially accessed by the healthcare individual. The box 42 of the unregistered MR, in which there are displayed MRs not approved by the healthcare individual, as customer, and which is provided in the sponsor frame 36 of the WWW browser window, is efficacious for acquisition of new customers. On the other hand, the box is unnecessary or even disagreeable for the healthcare individual when the MR of the branch office displayed therein has no relevance to the field of specialization of the healthcare individual. Hence, there is provided an unregistered MR box setting section 564 in the registration setting page shown in Fig.34. This unregistered MR box setting section 564 is provided with a check box 564a for setting whether or not the MR of the main office for setting is to be set in the box 42 of the unregistered MR, a first condition setting section 564b for setting in which box 42 of the unregistered MR provided in the sponsor frame 36 of the healthcare individual the display is to be made, a second condition setting section 564c which of 'and' and 'or' is to be used for each of plural conditions, and a PR (Public Relations) text entry section 564d for entering the PR text. In the first condition setting section 564b, advertisement may be made efficiently for the healthcare people by setting the division and specialization of the healthcare people as target of advertisement.

The registration setting page is further provided with a function setting section 565. This function setting section 565 is able to set an E-mail address, as a destination of transfer of the message from the customer, for promptly dealing with the message from the healthcare individual as customer. The function setting section 565 is also able to set the destination of transfer of the sent message and to change the password setting.

The registration setting page is further provided with a change content save button 566 which may be clicked to change and save the registration setting of the MR of the main office.

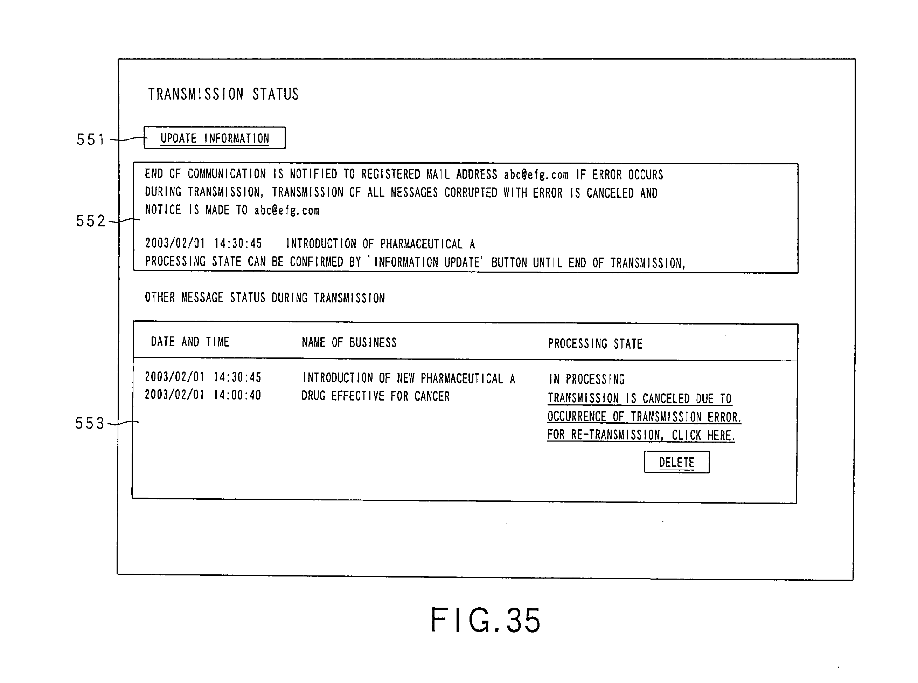

Also, when the transmitting state display section 407 of the top page of Fig.20 is clicked, a transmitting status page, shown in Fig.35, is displayed. This transmitting status page is provided with an update button 551 for updating the information and a transmitting state display section 552 for displaying the message transmitting state. In the transmitting state display section 552, it is demonstrated that, if an error has occurred during sending, full transmission of the messages corrupted with error is to be canceled automatically and the effect of transmitting error occurrence is to be notified.

In the transmitting status page, there is provided a list display section 553, in which the transmitting status of the messages other than the message displayed in the transmitting state display section 552 is displayed.

On receipt of a message for proxy distribution from the company terminal device 6 or the administrator terminal device 7, the assisting server device 1 stores it once in the database 2 and sends the message to the customer when it is the date and time for transmission specified. The error message displayed verifies that a transmitting error has occurred in the event of a write error occurring in the database 2, and notifies the fact of transmission error occurrence to the transmitting status page.

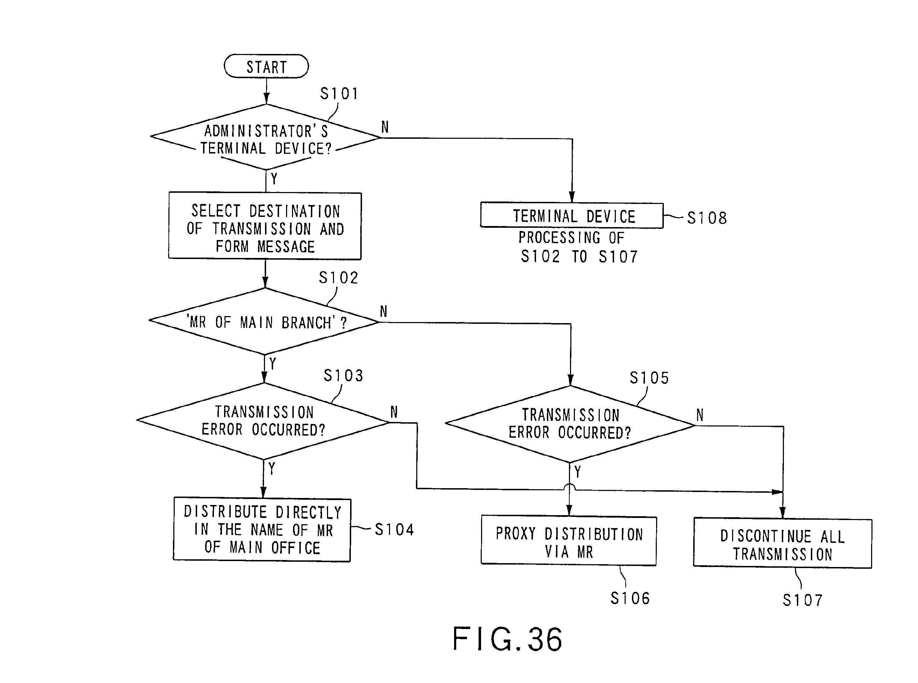

Referring to Fig.36, the operation of the assisting server device 1 when the MR of the main office or the administrator of the present system sends a message to the healthcare people, as customers, using the company terminal device 6 or the administrator terminal device 7, will now be explained.

When accessing the top page shown in Fig.20, the assisting server device 1 in a step S101 identifies the user by the user ID and the password entered from the terminal device, while verifying whether the terminal device is the administrator terminal device 7 or the company terminal device 6. If the assisting server device 1 has verified that the terminal device is the administrator terminal device 7, it proceeds to a step S102, whereas, if the assisting server device 1 has verified that the terminal device is not the administrator terminal device 7, it proceeds to a step S108.

When the terminal device accessed is the administrator terminal device 7, the assisting server device 1 is responsive to an operating signal from the administrator terminal device 7 to send a variety of Web pages, shown in Figs.20 to 35, to the administrator terminal device 7. This administrator terminal device is able to download these Web pages to confirm messages transmitted or received and also to formulate and transmit a message. Specifically, the administrator terminal device 7 retrieves and selects the customers, the message is sent to, by a customer retrieving page shown in Fig.27, and further selects one of the 'MR of the main office' and the 'proxy distribution via MR' by the transmitting side selecting section 501. The administrator terminal device 7 is a terminal device supervising the present system, and hence the messages prepared are relevant to ads for campaigns launched by the administrator or by a particular pharmaceutical manufacturing company or ads for a new pharmaceutical. Hence, the message is desired to be transmitted directly by the MR of the main office. Consequently, the transmitting side selecting section 501 is set to the 'MR of the main office' and the MR of the main office is to transmit the message to the healthcare people without the interposition of the MR in charge.

Moreover, since the administrator terminal device 7 has the totality of the healthcare people, who have registered the customers in the present system, as customers, it may extract those of the entire registered customers who meet preset conditions to select the destination of message transmission. That is, irrelevant to the fact that a plural number of pharmaceutical manufacturing companies take part in the present system as users and healthcare people as customers are associated with the respective pharmaceutical manufacturing companies, the administrator terminal device 7 is able to select the destination of transmission from the totality of the healthcare people registered in the present system. When the administrator of the present system launches proxy advertisement for a particular pharmaceutical manufacturing company, using the administrator terminal device 7, messages can be sent even to healthcare people not associated with the pharmaceutical manufacturing company which requested the proxy advertisement.

When the transmitting button 531 of the transmission content confirming page, shown in Fig.31, is clicked in the administrator terminal device 7, and e.g. a message has been sent, the assisting server device 1 in a step S 102 receives the message transmitted from the administrator terminal device 7, and verifies, in sending the message to the destination of transmission, whether or not proxy distribution is to be launched. Specifically, the assisting server device 1 verifies whether or not the transmitting side selecting section 501 in the customer retrieving page shown in Fig.27 is set to 'MR of the main office'. If the transmitting side selecting section 501 in the customer retrieving page shown in Fig.27 is set to 'MR of the main office', the assisting server device 1 proceeds to a step S103 and, if the transmitting side selecting section 501 is not set to 'MR of the main office', the assisting server device 1 verifies that 'proxy distribution via MR' is set, and accordingly proceeds to a step S105.

If the transmitting side selecting section 501 is set to 'MR of the main office', and the administrator of the present system directly sends a message to the healthcare people, the assisting server device 1 in the step S103 verifies whether or not a transmission error of the message from the administrator terminal device 7 has occurred. Specifically, the assisting server device 1 verifies, by the MR side message interface 300, whether or not the message and the entire information pertinent to the message have been saved in the database 2. If no transmission error has occurred, the assisting server device 1 proceeds to a step S 104 and, if otherwise, the assisting server device 1 proceeds to a step S 107 to refrain from executing full message transmission. That is, in the step S 107, the assisting server device 1 refrains from transmitting the message to the destination of transmission specified. The assisting server device 1 also displays an alarm in the transmitting status page, while transmitting an alarm E-mail to the registered mail address.

The assisting server device 1 in the step S 104 transmits a message to the user terminal device 4, to the destination of transmission specified, at the date and time specified by the message forming page, shown in Fig.30, in the name of the administrator of the present system.

If the administrator terminal device 7 has launched proxy distribution for advertising a new pharmaceutical, responsive to a request from the particular pharmaceutical manufacturing company, registered in the present system, ads for the new pharmaceutical may be made for customers other than those associated with the pharmaceutical manufacturing company which made the request. The message sent by proxy distribution from the administrator terminal device 7 is demonstrated on a monitor of the user terminal device 4, supervised by the healthcare individual, as shown in Fig.10. The message display section 125 of the receipt contact content page, shown in Fig.10, is provided with an approval button 125a associated with the MR of the main office of the pharmaceutical manufacturing company as an advertiser. When this approval button 125a is clicked by the healthcare individual, as a user, the healthcare individual, who received the message transmission, has approved the pharmaceutical manufacturing company which requested the message transmission by the user terminal device 4. Thus, the user terminal device 4 sends an approval signal of the MR of the main office to the assisting server device 1. The assisting server device 1, which has received the approval signal over the customer side message interface, correlates the healthcare individual, which has transmitted the approval signal, to the MR of the main office of the pharmaceutical manufacturing company, as an advertiser. The assisting server device 1 then generates the selective registration table 314 so that subsequently the healthcare individual becomes the customer of the pharmaceutical manufacturing company. Hence, the pharmaceutical manufacturing company, as an advertiser, may launch advertisements to increase the number of the customers of the present system, without sending the MR to the premises of the healthcare people.

If an error is caused in a message directly transmitted by the administrator of the present system to the healthcare people, with the transmitting side selecting section 501 set to the 'MR of the main office', during transmission, the transmission in its entirety is discontinued, such that no message is transmitted to the specified destinations. Consequently, there is no risk of the transmitting side becoming unable to grasp to which of the customers the messages have been sent, such that it becomes possible to prevent a plural number of the same messages from being transmitted to the healthcare individual.

There are occasions where the administrator terminal device 7 is used but 'proxy distribution via MR' is selected. In this case, the processing similar to that when the proxy distribution is launched using the company terminal device 6 is performed, as hereinafter explained.

In the above instance, the message is sent by the administrator of the present system of the administrator terminal device 7 who is the MR of the main office. An instance where the MR of the main office of each pharmaceutical manufacturing company registered in the present system transmits a message from the company terminal device 6 will now be explained. In a step S101, the assisting server device 1 specifies the company terminal device 6 by the user ID and the password entered from the terminal device, and then proceeds to a step S 108 to carry out the processing of steps S102 to S107. That is, in the step S102, the assisting server device retrieves and selects the customer, to whom the MR of the main office sends messages, on the customer retrieval page, shown in Fig.27, and the transmitting side selecting section 501 selects one of 'MR of the main office' and 'proxy distribution via MR'. In support of business activities in the name of the MR in charge with poor grads, the MR of the main office, operating the company terminal device 6, selects 'proxy distribution via MR'. If it is more efficient to send a message in the name of the MR of the main office, such as when sending a message not directly relevant to the MR in charge directly associated with the healthcare individual, the MR of the main office selects 'MR of the main office'. The MR of the main office then forms a preset page in the message forming page shown in Fig.30. When the transmitting button 531 is clicked on the transmitting content confirming page in the company terminal device 6, shown in Fig.31, the company terminal device 6 sends various data, such as messages, to the assisting server device 1. On receipt of the message, sent from the administrator terminal device 7, in a step S102, the assisting server device 1 verifies whether or not the transmitting side selecting section 501 in the customer retrieval page in Fig.27 has been set to the 'MR of the main office'. When the transmitting side selecting section 501 in the customer retrieval page in Fig.27 has been set to the 'MR of the main office', the assisting server device 1 proceeds to a step S103 and, if the transmitting side selecting section 501 has not been set to the 'MR of the main office', that is, if it has been set to 'proxy distribution via MR', the assisting server device 1 proceeds to a step S105.

When the transmitting side selecting section 501 has been set to 'MR of the main office' and the MR of the main office directly sends a message to the healthcare people, the assisting server device 1 verifies whether or not a transmission error has occurred in the message sent from the administrator terminal device 7, as described above. If such error has not occurred, the assisting server device proceeds to a step S 104 and, if otherwise, the assisting server device proceeds to a step S 107. In the step S 104, the assisting server device 1 sends the message to the specified destination of transmission to the user terminal device 4, in the name of the MR of the main office, at the date and time of transmission as specified on the message formulating page.

If the assisting server device 1 in the step S 102 has verified that 'proxy distribution via MR' has been set, it verifies in the step S105, as in the step S103, whether or not a transmission error has occurred in the message transmitted from the company terminal device 6. When the transmission error has occurred, the assisting server device 1 proceeds to the step S107 to perform the processing similar to that described above. Also, in the step S106, the assisting server device 1 sends a message, formulated by the MR of the main office, in place of the MR in charge associated with the healthcare people, to the healthcare people, as the destination of message transmission, at the specified destination of transmission, at the date and time specified in the message forming page shown in Fig.30.

If the registered content of the MR in charge is the content of the MR in charge (the aforementioned first method for MR registration), the message prepared by the MR of the main office is sent in the name of the MR in charge. In this case, the MR of the main office may support the MR in charge with poor grads.

If the registered content of the MR in charge is the content of the MR of the main office (the aforementioned second method for MR registration), the message prepared by the MR of the main office is sent in the name of the MR of the main office. For example, if the MR of the main office sends a message of e.g. the healthcare information, to a healthcare individual, as customer, using the function of the proxy distribution, the MR in charge of the healthcare individual may access the top page shown in Fig.19, using the own MR terminal device 5, and views the message exchange between the MR of the main office and the healthcare individual, as customer, to use the experience as a reference for communication when the MR in charge actually interviews with the healthcare individual.

When the 'proxy distribution via MR' is selected, the assisting server device 1 displays 'proxy distribution' in the list display section 251 of the top page (see Fig.19) associated with the healthcare individual as the destination of message transmission, to advise the MR in charge that proxy distribution has been carried out.
It is noted that, in the field of circulation of pharmaceuticals,, employing the above-described assisting system, there are MSs (Medical Sales, Marketing Specialists) belonging to wholesale companies, in addition to the MRs. Hence, the above-described systems may be used between the MS and the healthcare people. Moreover, the present invention is not limited to the field of circulation of pharmaceuticals, such that, in other circulation systems, the assisting server device 1 may be used for communication between the businessmen and customers.

### Industrial Applicability

According to the present invention, in which a service provider, acting as a proxy, sends messages to customers, out of the entire customers, who meet preset conditions, and in which a customer who has received the messages approves a preset salesperson, it is possible to increase the number of customers, without the salesperson having to visit the customer's premises. It is also possible to change the name of the transmitting side, thereby assuring efficient message transmission to the customer.

## Claims

1. An apparatus for assisting the marketing, comprising
a plurality of customer databases each configured for storing a plurality of customer tables in which private customer data have been entered;
a plurality of company databases each storing a company table supervising a plurality of salespersons, belonging to a company, a plurality of salesperson tables, provided from one salesperson belonging to said company to another, and a plurality of selection registration tables associating said customer tables with said salesperson tables;
a selection registration section for accepting, from a customer, the registration of identification data of salespersons approved by said customer, and for generating and holding said selection registration tables configured for correlating said salesperson tables of salespersons identified by said identification data with said customer tables;
a message database for holding messages sent from said salespersons to said customers and messages sent from the customers to said salespersons;
a customer side message interface for reading out said messages addressed to said customers from said message database for providing said messages over a network to said customers; and
a salesperson side message interface for assisting preparation of said messages addressed to said customers by said salespersons, with the generation of said selection registration tables as an incentive; wherein
at least one of said plural company databases is owned by a service provider; at least one of said salesperson tables of said company database of said service provider is associated with the entire customer tables associated with said salesperson tables of the entire company databases by said selection registration tables;
at least one of the salesperson tables of the remaining company databases is associated with the entire customer tables associated with the salesperson tables of the salespersons belonging to respective companies by said selection registration tables; and wherein
said customer side message interface reads out a message for a particular one of the companies of the remaining databases from said message databases to send said message over a network to customers of the totality of customer tables associated with said one salesperson table of said service provider; said customer side message interface on receipt of a consenting signal from the customer generating, in said selective registration section, a selection registration table associating one salesperson table of said particular company with a customer of a source of transmission of said consenting signal.

2. The apparatus for assisting the marketing according to claim 1 further comprising
retrieval means for retrieving the totality of customer tables associated with said one salesperson tables by said selection registration tables; wherein
at least one of salesperson tables of said company databases is a salesperson table belonging to an administrator of each company;
said customer side message interface reading out a message from said message database and acting in proxy in the name of said administrator or of salespersons of the other salesperson tables associated with each customer table to send said message over a network to a customer extracted in accordance with a preset retrieving condition by said retrieval means from the totality of the customer tables associated with said at least one salesperson table.

3. The apparatus for assisting the marketing according to claim 2 wherein the message sent in the name of said administrator or salespersons of said other salesperson tables to said customer includes a return message to a message from said customer.

4. The apparatus for assisting the marketing according to claim 3 wherein said salesperson side message interface displays a message transmitted or received by the salespersons of the other databases directly in charge of said customers and a message sent by said administrator so that said two messages may be distinguished from each other by the salespersons of the other databases directly in charge of said customers.

5. The apparatus for assisting the marketing according to claim 4 wherein said salesperson side message interface enables a message provided to said customer in the name of said administrator to be browsed in terminals of the salespersons of the other databases associated with the customer to whom the message is addressed.

6. The apparatus for assisting the marketing according to claim 5 wherein said salesperson side message interface enables a return message from a customer to a message, sent in the name of said administrator or of the salespersons of the other salesperson tables associated with each customer table, to be browsed in the terminals of said salespersons of the other databases associated with the customer to whom the message is addressed.

7. The apparatus for assisting the marketing according to claim 2 wherein said salesperson side message interface enables the transmission/ receipt hysteresis of the messages of the totality of salespersons of the company databases with said customers to be browsed in the terminal of the salesperson belonging to said administrator of each company.

8. The apparatus for assisting the marketing according to claim 2 wherein said salesperson side message interface provides use data for each customer to a salesperson terminal over a network.

9. The apparatus for assisting the marketing according to claim 2 wherein said company database groups together a plurality of customer tables out of the totality of the customer tables associated with at least said one salesperson table.

10. The apparatus for assisting the marketing according to claim 2 wherein said retrieval means comprises
wine-pressing means including unread message extracting means for extracting messages in the name of an administrator of each company or messages in the name of salespersons of the other databases, and responding customer extracting means for extracting customers who received messages addressed to an administrator of each company or messages addressed to the salespersons of the other databases during a preset time; and
customer name extracting means for extracting all or part of the customers' names entered as retrieving conditions;
said retrieval means extracting preset customers by said wine-pressing means and/or said customer name extracting means.

11. The apparatus for assisting the marketing according to claim 1 wherein said salesperson side message interface proceeds to not transmitting any of the messages in case messages cannot be sent simultaneously to all customers.

12. The apparatus for assisting the marketing according to claim 1 wherein said salesperson side message interface assists preparation of messages for customers of the customers' tables associated with the salesperson tables of said salespersons by said selection registration tables and the preparation of return messages to said messages transmitted from said customers.

13. The apparatus for assisting the marketing according to claim 1 wherein said customer side message interface causes the salespeople of salesperson tables, associated with the totality of customer tables of the company databases other than the database of said service provider and not approved by said customers, to be displayed in customer terminals.

14. The apparatus for assisting the marketing according to claim 1 wherein the totality of customer tables associated with said at least one of said salesperson tables are added to by a new customer table each time said new customer table is associated with said other salesperson tables.

15. A method for assisting the marketing comprising the steps of
accepting private data of a plurality of customers, registering said private data in a plurality of customer tables and storing the resulting customer tables in a plurality of customer databases;
accepting data supervising a plurality of salespersons belonging to a plurality of companies, registering the data in a plurality of company tables, accepting private data of the salespersons belonging to respective companies, registering the data in a plurality of salesperson tables and storing the resulting tables in a plurality of company databases;
accepting registration of identification data of the salespersons in charge, approved by the customers, from the customers, and generating a plurality of selection registration tables, correlating the salesperson tables of the salespersons identified by the identification data with said customer tables, to store the selection registration tables, thus generated, in said company databases;
reading out messages addressed to said customers from said message databases to send the messages over a network to said customers;
assisting the preparation of the messages addressed to said customers by said salespersons with the generation of said selection registration tables as an incentive;
at least one of plural company databases being owned by a service provider; at least one of said salesperson tables of said company database of said service provider being associated with the entire customer tables which are associated with the salesperson tables of the entire company databases by said selection registration tables;
at least one of the salesperson tables of the remaining company databases being associated with the entire customer tables associated with the salesperson tables of the salespersons belonging to respective companies by said selection registration tables;
reading out messages for a particular one of the companies of the remaining databases from said message databases to send said messages over a network to the customers of the totality of customer tables associated with said one salesperson table of said service provider;
receiving a consenting signal from the customer approving the salesperson of one salesperson table of said particular company; and
generating a selection registration table correlating one salesperson table of said particular company with the customer of said consenting signal.

16. The method for assisting the marketing according to claim 15 wherein at least one of salesperson tables of the remaining company databases is a salesperson table belonging to an administrator of each company, said method further comprising a step of
reading out a message from said message database and acting in proxy in the name of said administrator or of salespersons of the other salesperson tables associated with each customer table to send said message over a network to a customer extracted in accordance with a preset retrieving condition from the totality of the customer tables associated with said at least one salesperson table.

17. The method for assisting the marketing according to claim 16 wherein the message sent in the name of said administrator or said salespersons of the other databases to said customer includes a return message to a message from said customer.

18. The method for assisting the marketing according to claim 17 wherein messages transmitted or received by the salespersons of the other databases directly in charge of said customer and messages sent by said administrator are displayed in the terminals of said salespersons so that said two sorts of messages may be distinguished from each other in said terminals.

19. The method for assisting the marketing according to claim 18 wherein the messages provided to said customers in the name of said administrator may be browsed in terminals of salespersons of the other databases associated with the customers the messages are addressed to.

20. The method for assisting the marketing according to claim 19 wherein return messages from a customer to said messages transmitted in the name of said administrator or of the salespersons of the other salesperson tables associated with each customer table are browsable in the terminals of said salespersons associated with the customers the messages are addressed to.

21. The method for assisting the marketing according to claim 16 wherein the transmission/ receipt hysteresis of messages between the totality of the salespersons of said company database and said customers are browsable in the salesperson terminal belonging to the administrator of each company.

22. The method for assisting the marketing according to claim 16 further comprising a step of
said salesperson side message interface providing customer use data over a network to a salesperson terminal.

23. The method for assisting the marketing according to claim 16 further comprising a step of
grouping together a plurality of customer tables out of the totality of customer tables associated with at least said one salesperson table.

24. The method for assisting the marketing according to claim 16 wherein said retrieval comprises
a wine-pressing step including an unread message extracting sub-step of extracting messages in the name of an administrator of each company or messages in the name of salespersons of the other databases, and a responding customer extracting sub-step of extracting customers who transmitted messages addressed to an administrator of each company or messages addressed to the salespersons of the other databases; and
a customer name extracting step of extracting all or part of the customers' names entered as retrieving conditions;
said wine-pressing step and/or said customer name extracting step extracting preset customers.

25. The method for assisting the marketing according to claim 15 wherein processing for not transmitting any of the messages is carried out in case messages cannot be sent simultaneously to all customers.

26. The method for assisting the marketing according to claim 15 wherein the preparation of messages for customers of the customers' tables associated with the salesperson tables of said salespersons by said selection registration tables and the preparation of return messages to messages transmitted from said customers are assisted.

27. The method for assisting the marketing according to claim 15 wherein the salespeople of salesperson tables associated with the totality of customer tables of the company databases other than the database of said service provider and not approved by said customers are displayed in customer terminals.

28. The method for assisting the marketing according to claim 15 wherein the totality of customer tables associated with said at least one of said salesperson tables are added to with a new customer table each time such new customer table is associated with other salesperson tables.

29. A recording medium having recorded thereon a computer program for doing data processing of an apparatus for assisting the marketing, said apparatus comprising a plurality of customer databases each configured for storing a plurality of customer tables in which private customer data have been entered, a plurality of company databases each storing a company table supervising a plurality of salespersons, belonging to a company, a plurality of salesperson tables, provided from one salesperson belonging to said company to another, and a plurality of selection registration tables associating said customer tables with said salesperson tables, a selection registration section for accepting, from a customer, the registration of identification data of salespersons approved by said customer, and for generating and holding said selection registration tables configured for correlating said salesperson tables of salespersons identified by said identification data with said customer tables, a message database for holding messages sent from said salespersons to said customers and messages sent from the customers to said salespersons, a customer side message interface for reading out said messages addressed to said customers from said message database for providing said messages over a network to said customers, and a salesperson side message interface for assisting preparation of said messages addressed to said customers by said salespersons, with the generation of said selection registration tables as an incentive; wherein
at least one of said plural company databases is owned by a service provider; at least one of said salesperson tables of said company database of said service provider is associated with the entire customer tables associated with said salesperson tables of the entire company databases by said selection registration tables;
at least one of the salesperson tables of the remaining company databases is associated with the entire customer tables associated with the salesperson tables of the salespersons belonging to respective companies by said selection registration tables;
said computer program comprising the steps of
said customer side message interface reading out a message for a particular one of the companies of the remaining databases from said message databases to send said message over a network to customers of the totality of customer tables associated with said one salesperson table of said service provider; and
said customer side message interface generating, in said selective registration section, on receipt of a consenting signal from the customer, a selection registration table associating one salesperson table of said particular company with a customer of a source of transmission of said consenting signal.

30. A computer program for doing data processing of an apparatus for assisting the marketing, said apparatus comprising a plurality of customer databases each configured for storing a plurality of customer tables in which private customer data have been entered, a plurality of company databases each storing a company table supervising a plurality of salespersons, belonging to a company, a plurality of salesperson tables, provided from one salesperson belonging to said company to another, and a plurality of selection registration tables associating said customer tables with said salesperson tables, a selection registration section for accepting, from a customer, the registration of identification data of salespersons approved by said customer, and for generating and holding said selection registration tables configured for correlating said salesperson tables of salespersons identified by said identification data with said customer tables, a message database for holding messages sent from said salespersons to said customers and messages sent from the customers to said salespersons, a customer side message interface for reading out said messages addressed to said customers from said message database for providing said messages over a network to said customers, and a salesperson side message interface for assisting preparation of said messages addressed to said customers by said salespersons, with the generation of said selection registration tables as an incentive; wherein
at least one of said plural company databases is owned by a service provider; at least one of said salesperson tables of said company database of said service provider is associated with the entire customer tables associated with said salesperson tables of the entire company databases by said selection registration tables;
at least one of the salesperson tables of the remaining company databases is associated with the entire customer tables associated with the salesperson tables of the salespersons belonging to respective companies by said selection registration tables;
said computer program comprising the steps of
said customer side message interface reading out a message for a particular one of the companies of the remaining databases from said message databases to send said message over a network to customers of the totality of customer tables associated with said one salesperson table of said service provider; and
said customer side message interface generating, in said selective registration section, on receipt of a consenting signal from the customer, a selection registration table associating one salesperson table of said particular company with a customer of a source of transmission of said consenting signal.
